# EUROPÄISCHE PATENTSCHRIFT

(11) **EP 2 654 940 B1**
(45) Veröffentlichungstag und Bekanntmachung des Hinweises auf die Patenterteilung: **13.02.2019**
(21) Anmeldenummer: 11805787.6
(22) Anmeldetag: 22.12.2011
(51) Int. Cl.: B01J 3/04, B01J 4/02, C01B 11/02

(54) **VERFAHREN ZUR HERSTELLUNG EINER WÄSSRIGEN STABILEN CHLORDIOXIDLÖSUNG**
METHOD FOR PRODUCING AN AQUEOUS STABLE CHLORINE DIOXIDE SOLUTION
PROCÉDÉ DE FABRICATION D'UNE SOLUTION AQUEUSE, STABLE, DE DIOXYDE DE CHLORE

(30) Priorität: 23.12.2010 DE 102010055982
(43) Veröffentlichungstag der Anmeldung: 30.10.2013
(73) Patentinhaber: A.P.F. Aqua System AG, 42117 Wuppertal (DE)
(72) Erfinder: UHLMANN, Helmut, 42117 Wuppertal (DE)
(74) Vertreter: Kinkeldey, Daniela
(86) Internationale Anmeldenummer: PCT/EP2011/006510
(87) Internationale Veröffentlichungsnummer: WO 2012/084247

(56) Entgegenhaltungen:
- EP-A1- 2 445 832
- DE-A1-102006 060 578
- DE-C- 858 998
- US-A1- 2007 116 636
- "HERSTELLUNG VON REINEM CHLORDIOXID IM LABORATORIUM", UMWELT UND DEGUSSA. PRODUKTE, VERFAHREN, METHODEN, 1991, Seite COMPLETE, XP000847684,

## Beschreibung

Die vorliegende Erfindung betrifft ein Verfahren zur Herstellung einer sehr reinen, wässrigen, langzeit- und lagerstabilen, somit transportfähigen Chlordioxidlösung mit einer Konzentration an Chlordioxid von 0,3 bis 4,5 Gew.-%, umfassend die Schritte des Bereitstellens von Chlorit, des Bereitstellens von Peroxodisulfat und des Vereinigens von Chlorit und von Peroxodisulfat in einem wässrigen System und in einem molaren Verhältnis von Peroxodisulfat zu Chlorit [S₂O₈²⁻] / [ClO₂⁻] von größer als 1 unter Bildung der wässrigen Chlordioxidlösung, wobei zur Herstellung der wässrigen Chlordioxidlösung kein zusätzlicher Puffer zugegeben wird. Ferner betrifft die vorliegende Erfindung entsprechende Chlordioxidlösungen, die Verwendung dieser Chlordioxidlösungen sowie eine Vorrichtung zur Herstellung der Chlordioxidlösungen.

Wässrige Lösungen von Chlordioxid (ClO₂) finden aufgrund der hohen Oxidationskraft des Chlordioxids Verwendung zum Bleichen, Desinfizieren und Desodorieren, insbesondere in der Wasseraufbereitungstechnik. Lösungen von Chlordioxid gelten jedoch im Allgemeinen als schwer handhabbar, da gasförmiges Chlordioxid aus Lösungen leicht entweicht und dieses in höheren Konzentrationen explosiv ist. Daher werden Chlordioxidlösungen für die vorstehend genannten Anwendungen üblicherweise nicht als fertige Lösungen vertrieben, sondern werden erst bei Bedarf, d.h. vor Ort, frisch hergestellt und angewendet.

Dabei sind verschiedene Verfahren zur Herstellung von wässrigen Chlordioxidlösungen bekannt.

So kann eine wässrige Chlordioxidlösung beispielsweise durch Umsetzung einer Natriumchloritlösung mit einer Salzsäurelösung erzeugt werden (das so genannte Salzsäure-Chlorit-Verfahren). Dieses Verfahren hat unter anderem den Nachteil, dass Chlordioxid in einer solchen Lösung nicht stabil ist und innerhalb kurzer Zeit zu Chlorat und Chlorid zerfällt. Daher können auf diese Weise hergestellte Lösungen nicht gelagert werden, sondern müssen direkt verwendet werden.

Im so genannten Chlor-Chlorit-Verfahren wird eine Natriumchloritlösung entweder mit Chlor oder mit Hypochloriger Säure umgesetzt. Dieses Verfahren hat allerdings den Nachteil, dass gasförmiges Chlor und hypochlorige Säure schwer handhabbar sind. Darüber hinaus entsteht bei diesem Verfahren ein beträchtlicher Anteil an Chlorat als unerwünschtes Nebenprodukt, welches die Ausbeute an Chlordioxid und damit die Oxidationskraft der Lösung vermindert.

Als Alternative zu den beiden vorstehenden Verfahren wurde vorgeschlagen, eine Lösung von Chlordioxid durch Oxidation von Chlorit mit Peroxodisulfat herzustellen. Die WO-A-96/33947 beschreibt beispielsweise ein Verfahren zur Herstellung einer wässrigen Chlordioxidlösung, wobei eine Lösung von Chlorit mit einem halogenfreien Oxidationsmittel bei einem pH-Wert im Bereich von 5,5 bis 9,5 bei Raumtemperatur solange umgesetzt wird, bis das Chlorit im Wesentlichen vollständig zu Chlordioxid umgesetzt ist. Vorzugsweise wird als Oxidationsmittel Peroxodisulfat verwendet, wobei in diesem Dokument - ebenso wie im übrigen Stand der Technik - die folgende Summengleichung (1) für die Umsetzung von Chlorit mit Peroxodisulfat beschrieben ist:

2ClO₂⁻ + S₂O₈²⁻ → 2ClO₂^{•} + 2SO₄²⁻ (1)

Ausgehend von dieser Summengleichung wird generell angenommen, dass ein Äquivalent Peroxodisulfat zwei Äquivalente Chlorit oxidiert. Folglich wird in der WO-A-96/33947 vorgeschlagen, Peroxodisulfat in einer Menge zu verwenden, die zwischen dem ein- und zweifachen der stöchiometrisch zur Oxidation des Chlorits erforderlichen Menge liegt. Somit beschreibt die WO-A-96/33947 ein molares Verhältnis von Peroxodisulfat zu Chlorit [S₂O₈²⁻] / [ClO₂⁻] im Bereich von 0,5 bis 1,0.

Ein entsprechendes Verfahren ist auch in dem US-Patent 2,323,593 beschrieben, wobei in den Beispielen dieses Patents molare Verhältnisse von Peroxodisulfat zu Chlorit [S₂O₈²⁻] / [ClO₂⁻] von 0,57 bzw. 0,78 beschrieben sind. Weiterhin ist in dem US-Patent 2,323,593 ausgeführt, dass Verhältnisse von Peroxodisulfat zu Chlorit [S₂O₈²⁻] / [ClO₂⁻] von < 0,5 nachteilig sind, da diese die Reaktionsgeschwindigkeit herabsetzen.

In der EP-A-1 787 953 ist ebenfalls ein Verfahren zur Herstellung von Chlordioxidlösungen durch Umsetzung von Chlorit mit Peroxodisulfat beschrieben, wobei die Chlordioxidlösungen zur Desinfektion von Haut oder von harten Oberflächen vorgesehen sind. Daher ist der Fokus der EP-A-1 787 953 auf die schnelle Bereitstellung von äußerst verdünnten Chlordioxidlösungen (2 bis 300 ppm) am jeweiligen Einsatzort gerichtet ("point of use" Herstellung). Dazu wird ein molares Verhältnis von Peroxodisulfat zu Chlorit [S₂O₈²⁻] / [ClO₂⁻] von größer als 2 verwendet, wobei die Peroxodisulfatlösung sowie die Chloritlösung gepuffert sind.

Die vorstehend beschriebenen Verfahren weisen jedoch eine Reihe von Nachteilen auf, welche die Anwendung dieser Verfahren erschweren.

Insbesondere sind die Lösungen in ihrer Lagerstabilität nur auf kurze Zeit, maximal auf wenige Wochen, begrenzt, so dass eine Anwendung gealterter Lösungen hinsichtlich ihrer Wirksubstanzen und Zersetzungsprodukte problematisch ist. Zudem ist eine Distribution der fertigen Lösung meist nicht möglich. Deshalb wird üblicherweise eine "point of use" Herstellung empfohlen (vgl. beispielsweise EP-A-1 787 953). Dabei ist die Herstellung der entsprechenden Chlordioxidlösung dem Anwender vorbehalten, der die Chlordioxidlösung durch das Mischen entsprechender Vorlösungen selbst herstellen muss. Dies bedarf aber Sachkunde im Hinblick auf die Bestimmung des Umsetzungsgrades und der Nebenproduktbildung.

Darüber hinaus weisen die im Stand der Technik bekannten Verfahren den Nachteil auf, dass zur geregelten Umsetzung Temperaturen oberhalb der Raumtemperatur oder alternativ lange Reaktionszeiten erforderlich sind. Weiterhin sind systematisch schwankende, stark temperaturabhängige Reaktionszeiten und Ausbeuten sowie daraus resultierende unterschiedliche Reinheitsgrade weitere Probleme bei den bisher gängigen Verfahren. Zudem ist meistens eine pH-Wert-Stabilisierung durch verschiedene Puffersysteme sowie die Zugabe von Reaktionsbeschleunigern (Silber- und Kupfersalze, Carosche Säure) notwendig, welche weiter die Reinheit der zu verwendenden Chlordioxidlösung herabsetzen.

Der vorliegenden Erfindung liegt somit die Aufgabe zugrunde, eine Chlordioxidlösung bereitzustellen, welche eine hohe Lagerstabilität aufweist und somit nicht notwendigerweise vor Ort hergestellt werden muss, sondern auch als fertige Lösung vertrieben werden kann. Ferner liegt der vorliegenden Erfindung die Aufgabe zugrunde, ein Verfahren zur Herstellung dieser Chlordioxidlösung bereitzustellen, welches auf einfache Art und Weise unter milden Reaktionsbedingungen die Herstellung einer stabilen Chlordioxidlösung ermöglicht.

Diese Aufgabe wird durch die in den Ansprüchen gekennzeichneten Ausführungsformen gelöst.

Insbesondere wird ein Verfahren zur Herstellung einer wässrigen Chlordioxidlösung mit einer Konzentration an Chlordioxid von 0,3 bis 4,5 Gew.-% bereitgestellt, welches die folgenden Schritte umfasst:
(a) Bereitstellen von Chlorit,
(b) Bereitstellen von Peroxodisulfat,
(c) Vereinigen von Chlorit und von Peroxodisulfat in einem wässrigen System und in einem molaren Verhältnis von Peroxodisulfat zu Chlorit [S₂O₈²⁻] / [ClO₂⁻] von größer als 1 unter Bildung der wässrigen Chlordioxidlösung,
wobei zur Herstellung der wässrigen Chlordioxidlösung kein zusätzlicher Puffer zugegeben wird.

Schritte (a) und (b) können dabei in jeder beliebigen Reihenfolge durchgeführt werden.

In Schritt (a) des erfindungsgemäßen Verfahrens wird Chlorit (ClO₂⁻) bereitgestellt. Chlorit kann erfindungsgemäß in Form der Chlorigen Säure HClO₂ oder als geeignetes Salz eingesetzt werden. Vorzugsweise werden die Chlorite aus der Gruppe, bestehend aus Alkalimetallchloriten, insbesondere Lithiumchlorit, Natriumchlorit und Kaliumchlorit, Erdalkalimetallchloriten, insbesondere Magnesiumchlorit und Calciumchlorit, Ammoniumchloriten, insbesondere Ammoniumchlorit (NH₄ClO₂) und Tetraalkylammoniumchloriten, wie Tetramethylammoniumchlorit, Tetraethylammoniumchlorit und Tetrabutylammoniumchlorit, sowie deren Gemischen, ausgewählt. Besonders bevorzugt wird Chlorit aus der Gruppe, bestehend aus Natriumchlorit, Kaliumchlorit und deren Gemische, ausgewählt.

Chlorit kann entweder als Feststoff oder in Form einer Lösung, insbesondere in Form einer wässrigen Lösung, verwendet werden. Vorzugsweise wird Chlorit in möglichst reiner Form eingesetzt, da Verunreinigungen generell die Umsetzung von Chlorit mit Peroxodisulfat zu Chlordioxid stören können und die Stabilität des erhaltenen Chlordioxids vermindern können. Dennoch kann beispielsweise auch festes Natriumchlorit verwendet werden, welches käuflich erhältlich ist und neben Natriumchlorit bis zu etwa 25 Gew.-% Natriumchlorid, vorzugsweise bis zu etwa 20 Gew.-% Natriumchlorid, besonders bevorzugt bis zu etwa 10 Gew.-% Natriumchlorid enthalten kann, da Natriumchlorid weder die Umsetzung zu Chlordioxid stört, noch die Stabilität des Chlordioxids beeinträchtigt. In einer bevorzugten Ausführungsform des erfindungsgemäßen Verfahrens wird Chlorit in fester Form als Formling, Tablette, Kapsel oder Pellet bereitgestellt.

In Schritt (b) des erfindungsgemäßen Verfahrens wird Peroxodisulfat (S₂O₈²⁻) bereitgestellt. Peroxodisulfat kann erfindungsgemäß in Form der Peroxodischwefelsäure H₂S₂O₈ oder als geeignetes Salz eingesetzt werden. Vorzugsweise werden die Peroxodisulfate aus der Gruppe, bestehend aus Alkalimetallperoxodisulfaten, insbesondere Lithiumperoxodisulfat, Natriumperoxodisulfat und Kaliumperoxodisulfat, Erdalkalimetallperoxodisulfaten, insbesondere Magnesiumperoxodisulfat und Calciumperoxodisulfat, Ammoniumperoxodisulfaten, insbesondere Ammoniumperoxodisulfat ((NH₄)₂S₂O₈) und Tetraalkylammoniumperoxodisulfaten, wie Tetramethylammoniumperoxodisulfat, Tetraethylammoniumperoxodisulfat und Tetrabutylammoniumperoxodisulfat, sowie deren Gemischen, ausgewählt. Besonders bevorzugt wird Peroxodisulfat aus der Gruppe, bestehend aus Natriumperoxodisulfat, Kaliumperoxodisulfat und deren Gemische, ausgewählt.

Peroxodisulfat kann entweder als Feststoff oder in Form einer Lösung, insbesondere in Form einer wässrigen Lösung, verwendet werden. Vorzugsweise wird Peroxodisulfat in möglichst reiner Form eingesetzt, da Verunreinigungen die Umsetzung von Chlorit mit Peroxodisulfat zu Chlordioxid stören können und die Stabilität des erhaltenen Chlordioxids vermindern können. In einer bevorzugten Ausführungsform des erfindungsgemäßen Verfahrens wird Peroxodisulfat in fester Form als Formling, Tablette, Kapsel oder Pellet bereitgestellt.

Darüber hinaus ist es auch möglich, Chlorit und Peroxodisulfat gemeinsam bereitzustellen, beispielsweise als 2-phasiges binäres Feststoffgemisch oder als Formling, Tablette, Kapsel oder Pellet, in dem/der beide Komponenten getrennt voneinander enthalten sind und sich zeitverzögert lösen.

Werden Chlorit und/oder Peroxodisulfat in Form einer Lösung bereitgestellt, so erfolgt dies vorzugsweise in Form einer wässrigen Lösung. Dabei kann jedwedes geeignete Wasser, wie beispielsweise Leitungswasser, als Lösungsmittel verwendet werden. Vorzugsweise wird jedoch entmineralisiertes oder destilliertes Wasser verwendet. Die wässrigen Lösungen können aber auch noch weitere geeignete Co-Lösungsmittel enthalten, wie beispielsweise halogenierte oder nicht-halogenierte organische Lösungsmittel. In einer bevorzugten Ausführungsform ist das weitere Lösungsmittel ein geeignetes gegenüber der Reaktion inertes, wasserlösliches Lösungsmittel, bevorzugt aus der Gruppe, bestehend aus Methanol, Ethanol, n-Propanol, iso-Propanol, Butanol, und Gemischen davon, ausgewählt. Es ist besonders bevorzugt, ein mit Wasser mischbares Lösungsmittel zu verwenden. Das weitere Lösungsmittel kann beispielsweise in einer Menge von bis zu 80 Vol.-%, bevorzugt von bis zu 50 Vol.-%, besonders bevorzugt von bis zu 10 Vol.-%, ganz besonders bevorzugt von bis zu 5 Vol.-% verwendet werden.

Schritt (c) des erfindungsgemäßen Verfahrens umfasst das Vereinigen von Chlorit und Peroxodisulfat in einem wässrigen System unter Bildung der wässrigen Chlordioxidlösung. Dieses Vereinigen kann durch alle geeigneten Verfahren erfolgen, welche im Stand der Technik bekannt sind. Vorzugsweise erfolgt das Vereinigen der beiden Komponenten unter Mischen. Das Mischen kann ebenfalls durch alle geeigneten, dem Fachmann bekannten Verfahren erfolgen. Beispielsweise kann das Mischen im Labormaßstab mit einem Laborrührer erfolgen. Im großtechnischen Maßstab kann beispielsweise die Durchmischung in einem Rührwerksbehälter durchgeführt werden. Vorzugsweise wird das Vereinigen derart durchgeführt, dass eine homogene Lösung der beiden Komponenten resultiert, welche im Wesentlichen keine Feststoffe mehr enthält. Das Durchmischen unter Verwendung einer Mischvorrichtung bietet den Vorteil, dass die Umsetzung von Chlorit und Peroxodisulfat zu Chlordioxid beschleunigt wird.

In einer bevorzugten Ausführungsform des erfindungsgemäßen Verfahrens werden Chlorit und Peroxodisulfat in den Schritten (a) und (b) in fester Form oder in Form einer wässrigen Lösung bereitgestellt werden, wobei in Schritt (c)
(c1) beide Komponenten vor dem Vereinigen in Wasser gelöst werden, wenn beide Komponenten in fester Form bereitgestellt werden, oder
(c2) beide Komponenten in fester Form gleichzeitig oder nacheinander in ein wässriges Lösungsmittel eingebracht werden, oder
(c3) beide Lösungen vereinigt werden, wenn beide Komponenten in Form wässriger Lösungen bereitgestellt werden, oder
(c4) beide Komponenten in wässriger Lösung bereitgestellt werden und gleichzeitig oder nacheinander in ein wässriges Lösungsmittel eingebracht werden
um die wässrige Chlordioxidlösung herzustellen.

Vorzugsweise erfolgt das Vereinigen in Schritt (c1), indem die beiden Komponenten gemeinsam, gleichzeitig oder nacheinander, in Wasser gelöst werden, wenn beide Komponenten in fester Form bereitgestellt werden. Werden Chlorit und Peroxodisulfat beispielsweise als binäres Feststoffgemisch oder als Formling bereitgestellt, so kann dieses Feststoffgemisch oder dieser Formling einfach in Wasser gelöst werden und sodann die beiden so erhaltenen Lösungen im erfindungsgemäßen molaren Verhältnis im Wesentlichen gleichzeitig oder auch nacheinander vereinigt werden.

In Schritt (c2) werden die beiden Komponenten vorzugsweise in fester Form nacheinander in ein wässriges Lösungsmittel eingebracht. Insbesondere ist es bevorzugt, in diesem Fall zunächst Peroxodisulfat in wässriger Lösung vorzulegen und sodann Chlorit, sei es in fester Form oder in wässriger Lösung zuzugeben.

In Schritt (c3) werden bevorzugt beide Lösungen im erfindungsgemäßen molaren Verhältnis gleichzeitig vereinigt. Es ist jedoch auch möglich, zunächst die wässrige Lösung mit Peroxodisulfat vorzulegen und sodann die Chloritlösung zuzugeben.

In Schritt (c4) werden die beiden Komponenten vorzugsweise in wässriger Lösung bereitgestellt und nacheinander in ein wässriges Lösungsmittel eingebracht. In diesem Fall ist die Reihenfolge der Zugabe unerheblich und es kann entweder zunächst die wässrige Peroxodisulfatlösung oder die Chloritlösung vorgelegt werden und die jeweils andere Lösung anschließend zugegeben werden.

Das bevorzugte Verfahren ist dabei das Verfahren gemäß (c3), wobei beide Komponenten zunächst getrennt in einem wässrigen Lösungsmittel gelöst und anschließend die beiden Lösungen vereinigt und gemischt werden.

Es ist insbesondere bevorzugt, ein wässriges Lösungsmittel, besonders bevorzugt entmineralisiertes oder destilliertes Wasser, in der gewünschten Menge vorzulegen und sodann davon die gewünschten Mengen zur Herstellung der wässrigen Lösungen der beiden Bestandteile abzutrennen, die Lösungen herzustellen und wieder dem wässrigen Lösungsmittel zuzugeben.

In allen Fällen (c1) bis (c4) können die wässrigen Lösungen Chlorit in jedweder geeigneter Konzentration bis hin zur Sättigungskonzentration des entsprechenden Chloritsalzes enthalten. Dabei stellt die jeweilige Sättigungskonzentration keinen festen Wert dar, sondern hängt beispielsweise von der verwendeten Temperatur und der Natur des konkreten Chloritsalzes ab. Natriumchlorit weist beispielsweise eine Sättigungskonzentration von etwa 64.5 Gew.-% bei 20°C auf. Es ist aber bevorzugt, die Konzentration der wässrigen Lösungen an Chlorit auf nicht mehr als etwa 5 Gew.-%, vorzugsweise nicht mehr als 2 Gew.-% und insbesondere nicht mehr als 1 Gew.-% einzustellen. Die Konzentration an Peroxodisulfat in der wässrigen Lösung kann bis zu deren Sättigungskonzentration liegen. Dabei stellt die jeweilige Sättigungskonzentration keinen festen Wert dar, sondern hängt beispielsweise von der verwendeten Temperatur und der Natur des konkreten Peroxodisulfatsalzes ab. Natriumperoxodisulfat weist beispielsweise eine Sättigungskonzentration von etwa 54,5 Gew.-% bei 20°C auf.

Das zur Herstellung der erfindungsgemäßen Chlordioxidlösung verwendete Wasser kann jedwedes geeignete Wasser, wie beispielsweise Leitungswasser, sein. Vorzugsweise wird jedoch entmineralisiertes oder destilliertes Wasser verwendet, da die Lösung auf diese Weise weniger Fremdstoffe enthält, was hinsichtlich einer besseren Umsetzung von Chlorit und Peroxodisulfat zu Chlordioxid und einer erhöhten Stabilität des auf diese Weise erhaltenen Chlordioxids vorteilhaft ist. Darüber hinaus kann auch eines der vorstehend beschriebenen Co-Lösungsmittel in den vorstehend beschriebenen bevorzugten Mengen verwendet werden.

Nach dem Vereinigen von Chlorit und Peroxodisulfat wird Chlordioxid gebildet. Da diese Umsetzung in einem wässrigen System durchgeführt wird, liegt das gebildete Chlordioxid in der Form einer wässrigen Lösung vor.

Anschließend an die Herstellung von Chlordioxid in wässrigere Lösung ist es auch möglich, mit Wasser nicht mischbare Lösungsmittel zuzugeben, wie organische Lösungsmittel, insbesondere Dichlormethan, Chloroform und/oder Tetrachlormethan, und Chlordioxid in die organische Phase zu überführen. Dadurch werden stabile Lösungen von Chlordioxid in organischen Lösungsmitteln erhalten.

Es hat sich überraschend herausgestellt, dass bei dieser Umsetzung entgegen der zuvor beschriebenen Summengleichung (1) beim Einhalten der erfindungsgemäßen molaren Verhältnisse von Peroxodisulfat zu Chlorit von größer als 1 ein Äquivalent Peroxodisulfat mit einem Äquivalent Chlorit unter Bildung einer stabilen Lösung an Chlordioxid reagiert. Es wird angenommen, ohne an eine Theorie gebunden zu sein, dass bei dieser Reaktion ein Hydrogensulfatradikal gebildet wird, welches eine stabilisierende Wirkung auf das gebildete Chlordioxid ausübt. Diese Reaktion wird durch die nachfolgende Summengleichung (2) dargestellt:

ClO₂⁻ + HS₂O₈⁻ → [ClO₂^{•} ∗ HSO₄^{•}] + SO₄²⁻ (2)

Dabei wird HS₂O₈⁻ autokatalytisch aus S₂O₈²⁻ gebildet. Bei der Umsetzung von einem Äquivalent Chlorit mit einem Äquivalent Peroxodisulfat wird folglich neben einem Chlordioxidradikal ClO₂^{•} auch ein Hydrogensulfatradikal HSO₄^{•} gebildet. Diese beiden Radikale stabilisieren sich gegenseitig assoziativ, dargestellt durch das Radikalpaar [ClO₂^{•} ∗ HSO₄^{•}]. Diese Darstellung ist nur exemplarisch. Es ist ebenfalls denkbar, dass ein solches Radikalpaar ein Assoziat mit Wasser der Form [ClO₂^{•} ∗ H₂O ∗ HSO₄^{•}] bildet. Das Hydrogensulfatradikal selbst wurde bisher als nicht stabil erachtet.

Es wird weiterhin angenommen, ohne an eine Theorie gebunden zu sein, dass die Stabilisierung des Radikalkomplexes [ClO₂^{•} ∗ HSO₄^{•}] durch folgende Beobachtungen untermauert werden kann:
1) Die Chlordioxidlösung weist aufgrund des Protons des Hydrogensulfatradikals einen sauren pH-Wert auf (vorzugsweise im pH-Bereich von 2,5 bis 3). Dadurch befindet sich jedes Chlordioxidradikal im schwach sauren Milieu und es wird angenommen, dass dies zur Stabilisierung des Chlordioxidradikals beiträgt.
2) Durch die Assoziation mit dem Hydrogensulfatradikal könnte eine Verstärkung der Hydratbildung erfolgen, was die Wasserlöslichkeit erhöhen würde. Außerdem könnte durch die Assoziation der Dampfdruck des Radikals reduziert werden.
3) Durch die Assoziation wird möglicherweise auch die Rückbildungstendenz des Chlordioxidradikals zum Chlorit verringert.
4) Es wird angenommen, dass es aufgrund des ungeladenen Charakters beider Radikale in dem Assoziat keine Auswirkung in Bezug auf dessen Mobilität bzw. Permeabilität durch ansonsten salzundurchlässige Membrane wie Umkehrosmosemembrane (RO), Nanofiltrationsmembrane, etc. gibt.
5) Ferner wird angenommen, dass das Hydrogensulfatradikal die Möglichkeit hat, mit Wasser zu Hydrogenmonopersulfat oder zu Hydrogensulfat bzw. Sulfat zu reagieren. In dieser Umsetzung reagiert Chlordioxid unter Bildung von Chlorit oder Chlorat. Somit führt die Zersetzung des Radikalkomplexes [ClO₂^{•} ∗ HSO₄^{•}] in ungefährlicher Weise zu Zersetzungsprodukten. Bei Oxidationsreaktionen reagiert der Radikalkomplex unter Bildung der nicht umweltrelevanten Anionen Chlorid und Sulfat. Im Gegensatz dazu neigen herkömmliche, d.h. nicht stabilisierte Chlordioxidlösungen bei Zersetzung zu einer Explosionsneigung aufgrund der Bildung von Chlor und Sauerstoff.
6) Die Chlordioxidradikal-Konzentration ist die bestimmende Größe für die Radikalpaarbildung.

Die Bildung des vorstehend beschriebenen Radikalpaar-Assoziats wird durch experimentelle Untersuchungen belegt, die zeigen, dass dieses Radikalpaar-Assoziat als Ganzes destilliert wird und somit in die Gasphase gehen kann und auch membrangängig ist. Außerdem besitzt das Radikalpaar-Assoziat [ClO₂^{•} ∗ HSO₄^{•}] im Vergleich zum Chlordioxidradikal veränderte physikalische Eigenschaften, wie z.B. einen veränderten Dampfdruck und eine veränderte Löslichkeit. Das Oxidationspotential des Hydrogensulfatradikals steht vollumfänglich als Oxidationspotential mit einem weiteren Elektronenäquivalent zur Verfügung und es gibt somit keinen Verlust an Oxidationspotential. Dies wurde mittels Photometrie und Titration belegt. In Summe stehen sechs Elektronenäquivalente zur Verfügung, fünf für die Reduktion von Chlordioxid zu Chlorid sowie eines für die Reduktion des Hydrogensulfatradikals zu Sulfat. Untersuchungen haben gezeigt, dass in Wasser zunächst das Chlordioxidradikal abreagiert, erst anschließend das Hydrogensulfatradikal.

In Hinblick auf die vorstehenden Erkenntnisse ist das erfindungsgemäße Verfahren dadurch gekennzeichnet, dass im Vergleich zu den im Stand der Technik bekannten Verfahren von einer anderen Stöchiometrie für die Umsetzung von Chlorit und Peroxodisulfat zu Chlordioxid ausgegangen wird.

Daher werden in Schritt (c) des erfindungsgemäßen Verfahrens Chlorit und Peroxodisulfat in einem molaren Verhältnis von Peroxodisulfat zu Chlorit [S₂O₈²⁻] / [ClO₂⁻] von größer als 1 eingesetzt. Es wird also ein Äquivalent Chlorit mit einem molaren Überschuss an Peroxodisulfat umgesetzt, während bei den herkömmlichen Verfahren üblicherweise für ein Äquivalent Chlorit nur etwa 0,5 Äquivalente Peroxodisulfat verwendet wurden.

In einer bevorzugten Ausführungsform der vorliegenden Erfindung werden die Ausgangsstoffe in einem molaren Verhältnis von Peroxodisulfat zu Chlorit zwischen 1 und 2 (1 < [S₂O₈²⁻] / [ClO₂⁻] < 2) verwendet. Dabei wird Peroxodisulfat lediglich in einem leichten Überschuss in Bezug auf Chlorit eingesetzt, was dazu führt, dass bei vollständiger Umsetzung des Chlorits weniger als ein Äquivalent nicht-umgesetztes Peroxodisulfat (in Bezug auf das gebildete Chlordioxid) in der Chlordioxidlösung verbleibt. Da die Stabilität des Chlordioxids in der Lösung durch die Anwesenheit weiterer Komponenten generell vermindert wird (wenn auch durch Peroxodisulfat nur in geringem Maße), wird durch das vorstehend beschriebene molare Verhältnis zwischen 1 und 2 eine Chlordioxidlösung erhalten, welche eine erhöhte Stabilität aufweist.

In einer anderen bevorzugten Ausführungsform der vorliegenden Erfindung werden die Ausgangsstoffe in einem molaren Verhältnis von Peroxodisulfat zu Chlorit von größer als 2, besonders bevorzugt von größer als 4, noch mehr bevorzugt von größer als 10 verwendet. Es ist ferner möglich, ein Verhältnis von Peroxodisulfat zu Chlorit von bis zu etwa 100 zu verwenden. In dieser Ausführungsform wird Peroxodisulfat in einem größeren Überschuss in Bezug auf Chlorit eingesetzt, um so eine schnellere bzw. vollständige Umsetzung des eingesetzten Chlorits zu Chlordioxid zu erreichen.

Durch das Einhalten des erfindungsgemäßen molaren Verhältnisses läuft die Reaktion beschleunigt und nahezu quantitativ ab. Insbesondere bevorzugt wird beim erfindungsgemäßen Verfahren eine Ausbeute von mehr als etwa 80%, insbesondere mehr als etwa 90%, besonders bevorzugt mehr als 95% bezogen auf die Menge an eingesetztem Chlorit erreicht. Bei den erfindungsgemäßen Reaktionsbedingungen werden auch keine Nebenreaktionen beobachtet.

Weiterhin wurde festgestellt, dass es für eine effektive Umsetzung von Chlorit und Peroxodisulfat zu Chlordioxid nicht notwendig ist, die Reaktionslösung durch Zugabe eines Puffers auf einen bestimmten pH-Wert einzustellen. Vielmehr wurde gefunden, dass durch die Zugabe des Puffers weitere Fremdstoffe in die wässrige Lösung eingetragen werden, welche die Reaktionsgeschwindigkeit zu Chlordioxid und die Stabilität des Chlordioxids in der Lösung herabsetzen. Dementsprechend wird erfindungsgemäß zur Herstellung der wässrigen Chlordioxidlösung kein Puffer zugegeben. Es wird also bei der Herstellung kein zusätzlicher Puffer zugegeben. Dies bedeutet aber nicht, dass die erhaltene Lösung keinen Puffer enthält. So kann sich beispielsweise während der Reaktion ein Hydrogensulfat/Sulfat-Puffer aus dem während der Umsetzung gebildeten Sulfat bilden.

Ein üblich angewendeter Puffer zur Stabilisierung von Chlordioxid ist ein Stoffgemisch aus wenigstens einer schwachen Säure und deren konjugierter Base. Als schwache Säuren im Sinne der vorliegenden Erfindung werden Säuren angesehen, die einen p*K*ₐ Wert im Bereich von etwa -2 bis etwa 12 in Wasser haben. Durch Zugabe eines Puffers wird der pH-Wert einer wässrigen Lösung innerhalb eines pH-Bereichs im Wesentlichen konstant gehalten. Somit hat jedes Puffersystem einen pH-Bereich, innerhalb dessen sich der pH-Wert bei Zugabe einer starken Säure nicht wesentlich ändert. Starke Säuren sind diejenigen Säuren, die in wässriger Lösung vollständig dissoziiert vorliegen.

Insbesondere wird erfindungsgemäß kein Puffer, ausgewählt aus der Gruppe, bestehend aus einem Acetatpuffer, einem Phosphatpuffer, einem Boratpuffer, einem Citratpuffer und einem Carbonatpuffer, verwendet. Insbesondere wird erfindungsgemäß kein Hydrogencarbonat oder Carbonat verwendet.

Insbesondere bevorzugt wird einer in Schritt (a) bereitgestellten wässrigen Chloritlösung kein Puffer zugegeben, der die Lösung in einem pH-Bereich von 9 bis 12 puffert. Auch wird bevorzugt einer in Schritt (b) bereitgestellten wässrigen Peroxodisulfatlösung kein Puffer zugegeben, der die Lösung in einem pH-Bereich von 3 bis 9 puffert.

In einer bevorzugten Ausführungsform der vorliegenden Erfindung wird die Chlordioxidlösung hergestellt, indem eine Lösung von Chlorit mit einer Lösung von Peroxodisulfat vereinigt wird. Vorzugsweise wird dabei die Peroxodisulfatlösung derart konzentriert verwendet, dass diese einen pH-Wert im Bereich von etwa 4 bis etwa 8 aufweist. In einer bevorzugten Ausführungsform beträgt der pH-Wert der Peroxodisulfatlösung etwa 4 bis etwa 6, in einer anderen bevorzugten Ausführungsform beträgt der pH-Wert etwa 6 bis etwa 8. Weiterhin wird die Chloritlösung vorzugsweise derart konzentriert verwendet, dass diese einen pH-Wert im Bereich von etwa 10 bis etwa 12 aufweist. Besonders bevorzugt weist die Peroxodisulfatlösung einen pH-Wert von etwa 5 und die Chloritlösung einen pH-Wert von etwa 11 auf.

Werden die vorstehend beschriebenen wässrigen Lösungen von Chlorit und Peroxodisulfat miteinander vereinigt, so stellt sich der pH-Wert der Lösung während der Reaktion von Chlorit mit Peroxodisulfat zu Chlordioxid vorzugsweise auf einen Wert von etwa 2 bis etwa 4 ein, d.h. der pH-Wert der wässrigen Lösung stabilisiert sich mit zunehmender Vervollständigung der Reaktion von Chlorit mit Peroxodisulfat zu Chlordioxid auf den Bereich von etwa 2 bis etwa 4. Besonders bevorzugt ist es, wenn sich der pH-Wert auf einen Bereich von etwa 2,5 bis etwa 3 einstellt. Noch mehr bevorzugt werden Chlorit und Peroxodisulfat in einer solchen Menge und Konzentration verwendet, dass sich der pH-Wert der vereinigten Lösung während der Reaktion auf einen Wert von etwa 2,5 stabilisiert.

Den erhaltenen Chlordioxidlösungen kann nach deren Herstellung ein Puffer zugegeben werden, vorzugsweise ein Puffer, der in einem pH-Bereich von etwa 2 bis 4 puffert.

Das erfindungsgemäße Verfahren kann bei jedweder geeigneten Temperatur durchgeführt werden. Es ist aber vorteilhaft, wenn die Umsetzung von Chlorit und Peroxodisulfat bei vergleichsweise niedrigen Temperaturen im Bereich etwa 0°C bis etwa 25°C durchgeführt wird. Im Gegensatz dazu sind bei den herkömmlichen Verfahren im Allgemeinen höhere Temperaturen oberhalb von 25°C notwendig, um eine beschleunigte Umsetzung von Chlorit mit Peroxodisulfat zu Chlordioxid zu erreichen. In einer bevorzugten Ausführungsform der vorliegenden Erfindung wird das Vereinigen von Peroxodisulfat und Chlorit bei einer Temperatur im Bereich von etwa 0°C bis etwa 25°C durchgeführt, besonders bevorzugt in einem Bereich von etwa 2°C bis etwa 20°C. Ganz besonders bevorzugt wird der Schritt (c) des Vereinigens bei einer Temperatur im Bereich von etwa 5°C bis etwa 15°C durchgeführt. Es hat sich gezeigt, dass bei höheren Temperaturen (also von größer als etwas 25°C Nebenreaktionen) auftreten, die zu unerwünschten Nebenprodukten führen. Die Bildung von Nebenprodukten ist nachteilig, da diese die Stabilität der erfindungsgemäßen Chlordioxidlösung vermindern.

Dabei ist es weiterhin vorteilhaft, dass dieser Temperaturbereich nicht nur während des Vereinigens der Chloritkomponente mit der Peroxodisulfatkomponente eingehalten wird, sondern solange, bis die Umsetzung von Chlorit mit Peroxodisulfat zu Chlordioxid im Wesentlichen vervollständigt ist. Dazu werden vorzugsweise die verwendeten wässrigen Lösungen vor dem Vereinigen auf die entsprechende Temperatur gebracht und anschließend so lange in diesem Temperaturbereich gehalten, bis die Umsetzung zu Chlordioxid im Wesentlichen vervollständigt ist. Neben der Temperierung der verwendeten Lösungen ist es darüber hinaus noch vorteilhaft, die Umgebung während des Vereinigens und bis zur Vervollständigung der Reaktion auf die vorstehend beschriebenen bevorzugten Bereiche zu temperieren. Dies kann beispielsweise in einem Kühlschrank, Kühlhaus oder Kühlbehälter erfolgen. In einer besonders bevorzugten Ausführungsform des erfindungsgemäßen Verfahrens werden eine Chloritlösung und eine Peroxodisulfatlösung unter Kühlung bei einer Temperatur im Bereich von etwa 5°C bis etwa 15°C vereinigt und dann in diesem Temperaturbereich bis zur vollständigen Umsetzung zu Chlordioxid reagieren gelassen.

In einer weiteren bevorzugten Ausführungsform wird die durch das erfindungsgemäße Verfahren erhaltene Chlordioxidlösung auch nach Vervollständigung der Umsetzung in diesem Temperaturbereich gehalten bzw. gelagert. Reines Chlordioxid hat einen Siedepunkt von 11°C bei 1013 mbar. Vorzugsweise wird daher die durch das erfindungsgemäße Verfahren erhaltene wässrige Chlordioxidlösung unterhalb von etwa 11°C gelagert, insbesondere bei einer Temperatur im Bereich von etwa 0°C bis etwa 11°C.

Wird das Vereinigen von Chlorit und Peroxodisulfat in dem bevorzugten Temperaturbereich von etwa 0°C bis etwa 25°C, bevorzugter größer als 0°C bis etwa 11°C, durchgeführt, so kann das Auftreten von Nebenreaktionen und damit von unerwünschten Nebenprodukten, wie Chlor, Hypochlorit und Chlorat, während der Bildung von Chlordioxid im Wesentlichen vermieden werden. Daher enthält die mit dem erfindungsgemäßen Verfahren hergestellte Chlordioxidlösung weniger Fremdstoffe, was die Stabilität der erfindungsgemäßen Chlordioxidlösung weiter erhöht.

Vorzugsweise wird das erfindungsgemäße Verfahren unter Lichtausschluss durchgeführt. So wurde gefunden, dass in Gegenwart von UV-Strahlung bzw. Sonnenlicht die Bildung von Nebenprodukten möglich ist. Die Bildung von Nebenprodukten ist nachteilig, da gefunden wurde, dass Nebenprodukte bzw. Fremdstoffe die erfindungsgemäße Chlordioxidlösung destabilisieren. Je weniger Nebenprodukte sich im Reaktionsgemisch befinden, desto langzeitstabiler ist die erhaltene Lösung.

Durch das Vereinigen von Chlorit und Peroxodisulfat in Schritt (c) des erfindungsgemäßen Verfahrens kommt es zur Reaktion zwischen diesen beiden Komponenten, wobei Chlordioxid gebildet wird (vgl. die vorstehende Summengleichung (2)). Mit dem erfindungsgemäßen Verfahren ist es möglich, innerhalb von etwa 72 Stunden einen nahezu quantitativen Umsatz (d.h. einen Umsatz von größer als 95%) von Chlorit zu Chlordioxid zu erzielen. Vorzugsweise erhält man einen nahezu quantitativen Umsatz bereits nach 48 Stunden, besonders bevorzugt bereits nach 24 Stunden. Insbesondere für 0,3- bis 0,6 Gew.-%ige Lösungen erhält man einen nahezu quantitativen Umsatz bereits nach 48 Stunden, bevorzugt bereits nach 24 Stunden. Für höher konzentrierte Lösungen (beispielsweise für Konzentrationen von 1 Gew.-% oder mehr) kann die Reaktionszeit bis zum Erreichen eines quantitativen Umsatzes auf wenige Minuten reduziert werden, vorzugsweise auf 30 Minuten oder weniger, besonders bevorzugt auf 15 Minuten oder weniger. Bei konstanter Temperatur and konstantem Peroxodisulfat-Chlorit-Verhältnis ist die Umsetzung umso schneller, je höher die Konzentration an Chlorit ist. Bei konstanter Konzentration von Chlorit und Peroxodisulfat erfolgt die Umsetzung umso schneller, je höher die Temperatur ist. Schließlich führt eine Erhöhung des Verhältnisses von Peroxodisulfat zu Chlorit bei konstanter Temperatur ebenfalls zu einer schnelleren Umsetzung.

Im Gegensatz dazu wurden im Stand der Technik (vgl. beispielsweise WO-A-96/33947) für die Herstellung höher konzentrierter Chlordioxidlösungen Reaktionszeiten bis zur quantitativen Umsetzung von etwa 12 Tagen beschrieben.

Vorzugsweise enthält das erfindungsgemäße Verfahren nach Schritt (c) den weiteren Schritt des Reagierenlassens von Chlorit mit Peroxodisulfat, bis Chlorit im Wesentlichen vollständig (d.h. mehr als 95% des eingesetzten Chlorits) zu Chlordioxid umgesetzt wurde. In einer besonders bevorzugten Ausführungsform enthält das erfindungsgemäße Verfahren nach dem Schritt (c) den weiteren Schritt des Reagierenlassens von Chlorit mit Peroxodisulfat für eine Dauer von mindestens 12 Stunden, vorzugsweise für eine Dauer von mindestens 24 Stunden, noch mehr bevorzugt für eine Dauer für mindestens 36 Stunden. In einer anderen besonders bevorzugten Ausführungsform enthält das erfindungsgemäße Verfahren nach dem Schritt (c) den weiteren Schritt des Reagierenlassens von Chlorit mit Peroxodisulfat für eine Dauer von 12 bis 48 Stunden und vorzugsweise für eine Dauer von 24 bis 36 Stunden.

Mit dem erfindungsgemäßen Verfahren können Chlordioxidlösungen mit einer Konzentration an Chlordioxid von 0,3 bis 4,5 Gew.-% hergestellt werden. Vorzugsweise werden mit dem erfindungsgemäßen Verfahren bis zu etwa 2 Gew.-%ige, bevorzugt etwa 1% Gew.-ige wässrige Lösungen von Chlordioxid hergestellt. Höher konzentrierte Lösungen von Chlordioxid sind aufgrund der begrenzten Löslichkeit von Chlordioxid in Wasser zwar schwieriger zu erreichen, können aber dennoch realisiert werden. Bei Verwendung von höheren Konzentrationen an Chlorit zur Herstellung der erfindungsgemäßen Chlordioxidlösungen, insbesondere bei Verwendung von Chloritkonzentrationen im Bereich der Sättigungslöslichkeit des entsprechenden Chloritsalzes, können wässrige Chlordioxidlösungen mit einer Konzentration von bis zu etwa 4,5 Gew.-% hergestellt werden. Der Wert von ca. 4,5 Gew.-% stellt dabei die praktisch ermittelte Sättigungsgrenze von Chlordioxid in Wasser bei 5°C und Normaldruck dar. Unter erhöhtem Druck sind selbst freie Chlordioxidphasen in Wasser erzeugbar.

Derartige Gemische enthalten typischerweise mehr als etwa 4,5 bis etwa 12 Gew.-% Chlordioxid, bezogen auf die Gesamtmenge an Chlordioxid und Wasser. Die Löslichkeit von Chlordioxid in Wasser wird nämlich entscheidend von im Wasser gelösten Fremdstoffen beeinflusst, welche die Löslichkeit des Chlordioxids herabsetzen. Dies bedeutet, dass die Löslichkeit von Chlordioxid in Wasser umso höher ist, je weniger Fremdstoffe in der Lösung enthalten sind. Da mit dem erfindungsgemäßen Verfahren Chlordioxidlösungen mit einem geringeren Fremdstoffanteil erhalten werden, ist auch die Löslichkeit von Chlordioxid in den erfindungsgemäßen Lösungen höher als in herkömmlichen Chlordioxidlösungen.

Darüber hinaus sind Chlordioxidlösungen selbst bei vergleichsweise hohen Konzentrationen von bis zu etwa 12 Gew.-%, und vorzugsweise von bis zu etwa 2 Gew.-% an Chlordioxid gut handhabbar und zeigen keine Neigung zur Explosion durch Spontanzersetzung. Aus Sicherheitsgründen werden aber vorsorglich mit dem erfindungsgemäßen Verfahren vorzugsweise Chlordioxidlösungen mit einer Konzentration von bis zu etwa 2,5 Gew.-%, besonders bevorzugt bis zu etwa 1 Gew.-%, und insbesondere etwa 0,6 Gew.-% an Chlordioxid hergestellt. Im Gegensatz dazu ist im Stand der Technik beschrieben, dass Lösungen von Chlordioxid umso stabiler sind, je verdünnter sie vorliegen. Daher werden im Stand der Technik zumeist Konzentrationen von nicht mehr als 0,3 Gew.-% beschrieben. Es ist aber mit dem erfindungsgemäßen Verfahren selbstverständlich auch möglich, schwächer konzentrierte Lösungen von Chlordioxid herzustellen, falls dies gewünscht ist. Dies kann beispielsweise auch erfolgen, indem zunächst höher konzentrierte Lösungen von Chlordioxid mit Konzentrationen vorzugsweise im Bereich von etwa 0,5 bis etwa 4,5 Gew.-% durch das erfindungsgemäße Verfahren hergestellt werden, und diese dann auf die gewünschten niedrigeren Konzentrationen, beispielsweise im Bereich von etwa 0,003 bis etwa 1 Gew.-%, verdünnt werden.

Im Rahmen der vorliegenden Erfindung werden Lösungen mit einer Konzentration an Chlordioxid im Bereich von 0,3 Gew.-% bis 4,5 Gew.-%, bevorzugter im Bereich von 0,3 Gew.-% bis etwa 2,5 Gew.-%, noch bevorzugter im Bereich von etwa 0,3 Gew.-% bis 1 Gew.-%, ganz besonders bevorzugt im Bereich von mehr als 0,3 Gew.-% bis etwa 0,6 Gew.-% und insbesondere von etwa 0,5 Gew.-% bis etwa 0,6 Gew.-% hergestellt. Entsprechende Lösungen mit einer Konzentration an Chlordioxid von mehr als 0,3 Gew.-% bis etwa 0,6 Gew.-% sind insbesondere vorteilhaft, da diese deutlich konzentrierter als herkömmliche Chlordioxidlösungen sind und dennoch lagerstabil sowie gut handhabbar sind. Die geeignete Konzentration hängt dabei im Wesentlichen von der vorgesehenen Verwendung ab und kann von einem Fachmann entsprechend gewählt werden. Weniger konzentrierte Lösungen können - wie vorstehend bereits beschrieben - auch ohne Weiteres aus höher konzentrierten Chlordioxidlösungen durch entsprechende Verdünnung erhalten werden.

Mit dem erfindungsgemäßen Verfahren kann Chlordioxid entweder kontinuierlich im Durchflussbetrieb oder aber chargenweise im Batch-Betrieb hergestellt werden. Wird das erfindungsgemäße Verfahren im Durchflussbetrieb durchgeführt, so ist es besonders vorteilhaft, Chlorit sowie Peroxodisulfat in Form wässriger Lösungen bereitzustellen.

In einer weiteren bevorzugten Ausführungsform der vorliegenden Erfindung wird die nach dem Vereinigen in Schritt (c) erhaltene Lösung in einen Behälter gefüllt, in welchem die Lösung gelagert und/oder transportiert werden kann. Wenn die Lösung in den Behälter gefüllt wird, muss die Umsetzung zu Chlordioxid noch nicht abgeschlossen sein. Es ist nämlich ebenfalls möglich, dass die Vervollständigung der Reaktion von Chlorit und Peroxodisulfat zu Chlordioxid erst erfolgt, nachdem die Lösung in den zur Lagerung oder zum Transport der Lösung vorgesehenen Behälter umgefüllt wurde. Daher kann der Schritt des Abfüllens vor oder nach dem optionalen weiteren Schritt des Reagierenlassens von Chlorit mit Peroxodisulfat erfolgen. In einer anderen bevorzugten Ausführungsform erfolgt das Vereinigen in Schritt (c) bereits in dem zur Lagerung oder zum Transport der Lösung vorgesehenen Behälter. Diese Variante ist besonders vorteilhaft, da es dabei nicht notwendig ist, die fertige Chlordioxidlösung nochmals umzufüllen. Geeignete Behälter werden nachstehend beschrieben.

Das erfindungsgemäße Verfahren zur Herstellung einer Chlordioxidlösung und die daraus erhältlichen Chlordioxidlösungen weisen im Vergleich zum Stand der Technik zahlreiche Vorteile auf. So ermöglicht das erfindungsgemäße Verfahren die Herstellung einer Chlordioxidlösung unter äußerst milden Reaktionsbedingungen (insbesondere bei einer niedrigen Temperatur) unter Verwendung von nur zwei Komponenten. Weiterhin bedarf es nur eines geringen apparativen Aufwandes, da beispielsweise keine Erwärmung des Reaktionsgemisches notwendig ist. Ferner kann mit dem erfindungsgemäßen Verfahren in vergleichsweise kurzen Reaktionszeiten eine nahezu quantitative Umsetzung der Chlorkomponente erreicht werden, ohne dass ein Aktivator oder Katalysator (meist Schwermetallsalze) zugesetzt oder ein definiertes Puffersystem verwendet werden muss.

Aufgrund der einfachen und vollständigen Umsetzung enthält die resultierende Lösung kaum weitere Komponenten bzw. Fremdstoffe (wie beispielsweise nicht-umgesetzte Ausgangsstoffe, unerwünschte Nebenprodukte, Puffer, Aktivatoren oder Katalysatoren), sondern fast ausschließlich Chlordioxid. Es wurde nun überraschenderweise gefunden, dass dieses Fehlen von Fremdstoffen in der Chlordioxidlösung die Stabilität der Chlordioxidlösung signifikant verbessert. So wurde festgestellt, dass die Stabilität der Chlordioxidlösung umso höher und die Zersetzungsneigung der Chlordioxidlösung umso niedriger ist, je höher die Reinheit der Chlordioxidlösung ist. Daraus ergibt sich, dass eine erhöhte Stabilität einer Chlordioxidlösung erreicht wird, wenn das Chlordioxid mit einem möglichst geringen Einsatz von Chemikalien hergestellt wird, was durch das erfindungsgemäße Verfahren ermöglicht wird. Es wurde gefunden, dass Zusätze offenbar zur Destabilisierung der Lösung führen.

In der erfindungsgemäßen Chlordioxidlösung sind aufgrund der äußerst selektiven Umsetzung, wenn überhaupt, nur geringe Mengen an Hypochlorit, Chlor und Chlorat als Fremdstoffe vorhanden. Daher ist die Gefahr der Zersetzung des Chlordioxids durch etwaige Redox-Reaktionen mit diesen Komponenten erheblich vermindert. Aufgrund dessen ist die erfindungsgemäße Chlordioxidlösung dauerhaft, insbesondere für mindestens ein Jahr, lagerfähig, ohne dass eine nennenswerte Zersetzung des Chlordioxids zu beobachten wäre. Daher ist auch die Zugabe eines Stabilisators zu der erfindungsgemäßen Chlordioxidlösung nicht notwendig.

Um eine erhöhte Reinheit der Chlordioxidlösung sicherzustellen, wird in dem erfindungsgemäßen Verfahren kein Puffer zur Herstellung der Chlordioxidlösung verwendet. In einer bevorzugten Ausführungsform ist das erfindungsgemäße Verfahren darüber hinaus auf die Verwendung der Chloritkomponente sowie der Peroxodisulfatkomponente beschränkt, wobei keine weiteren Komponenten, ausgewählt aus der Gruppe, bestehend aus Aktivatoren, Katalysatoren und Stabilisatoren, zur Herstellung der Chlordioxidlösung verwendet werden, d.h. zu den Ausgangsstoffen oder zu der resultierenden Chlordioxidlösung zugegeben werden. Aktivatoren können beispielsweise Radikalinitiatoren sein. In einer besonders bevorzugten Ausführungsform werden bei dem erfindungsgemäßen Verfahren keinerlei Katalysatoren verwendet. Katalysatoren können insbesondere Übergangsmetallsalze, wie beispielsweise Silber-, Mangan-, Kupfer- und Eisensalze, oder Alkali- und Erdalkalihalogenide sein. Es hat sich insbesondere gezeigt, dass die Zugabe von Alkali- und Erdalkalibromiden und -iodiden nachteilig ist, da diese zur Zerstörung des Chlordioxids über die Bildung von Brom und Iod führen. Stabilisatoren können beispielsweise EDTA-Salze sein. In einer weiteren bevorzugten Ausführungsform werden bei dem erfindungsgemäßen Verfahren auch keine Hilfsstoffe, wie beispielsweise Sorbitol, Stärke, Polyethylenglykol, Natriumbenzoat oder Duftstoffe, verwendet. In einer besonders bevorzugten Ausführungsform des erfindungsgemäßen Verfahrens ist das Verfahren ferner auf die Verwendung der Chloritkomponente sowie der Peroxodisulfatkomponente beschränkt, wobei keinerlei weitere Komponenten zur Herstellung der Chlordioxidlösung verwendet werden.

Im Stand der Technik ist dagegen beschrieben, dass allein hohe Konzentrationen an Chlordioxid die Zersetzung beschleunigen und dass Pufferzusätze bzw. Stabilisatoren zur Erhöhung der Stabilität erforderlich sind. Dieses Vorurteil konnte nun widerlegt werden.
Aufgrund dieser erhöhten Stabilität können die erfindungsgemäßen Chlordioxidlösungen nicht nur dauerhaft gelagert werden, sondern bieten auch eine transportable Lösung. Im Vergleich zum Stand der Technik ist es mit dem erfindungsgemäßen Verfahren nun nicht mehr notwendig, die Chlordioxidlösung erst direkt vor der geplanten Anwendung vor Ort herzustellen. Vielmehr kann eine Chlordioxidlösung nun auch in größeren Mengen hergestellt und abgefüllt werden und erst dann zum vorgesehenen Anwendungsort transportiert werden.
Weiterhin ist eine Anwendung des erfindungsgemäßen Verfahrens in jeder Größenordnung problem- und gefahrlos möglich, nämlich von Mengen im Milligrammbereich bis hin zu Großanwendungen im Bereich von mehreren tausend Kubikmetern.
Die Lösung ist nach Beendigung des erfindungsgemäßen Herstellungsverfahrens direkt gebrauchsfertig, eine weitere Aufarbeitung, beispielsweise durch Absorptionssäulen, Entsalzung, Vermischungen mit anderen Lösungen, etc., ist nicht erforderlich.
Die vorliegende Erfindung betrifft ferner eine wässrige Chlordioxidlösung, welche Chlordioxid in einer Menge von mehr als 0,3 Gew.-% bis 4,5 Gew.-% enthält, wobei der pH-Wert der wässrigen Lösung im Bereich von 2 bis 3 liegt und die Lösung keinen Puffer enthält. Bevorzugt ist eine Chlordioxidlösung mit einer Konzentration an Chlordioxid im Bereich von mehr als 0,3 bis etwa 0,6 Gew.-%. Die erfindungsgemäße Lösung ist insbesondere vorteilhaft, da sie deutlich konzentrierter als herkömmliche Chlordioxidlösungen ist und dennoch lagerstabil sowie gut handhabbar ist.
Die mit dem erfindungsgemäßen Verfahren erhältliche wässrige Chlordioxidlösung kann Chlordioxid zusammen mit dem Hydrogensulfatradikal in Form eines Radikalpaar-Assoziats enthalten, wobei die Lösung keinen Puffer enthält. In einer bevorzugten Ausführungsform enthält diese erfindungsgemäße Chlordioxidlösung keine weiteren Komponenten, ausgewählt aus der Gruppe, bestehend aus Aktivatoren, Katalysatoren und Stabilisatoren.
Diese Chlordioxidlösungen haben die vorstehend beschriebenen Vorteile einer erhöhten Stabilität selbst bei hohen Konzentrationen und der damit verbundenen verlängerten Lagerfähigkeit sowie Transportfähigkeit.

Die erfindungsgemäßen Chlordioxidlösungen sind darüber aufgrund ihres nur schwach sauren pH-Wertes korrosionsarm und weisen ferner, verglichen mit herkömmlichen Chlordioxidlösungen, zum Schutz der Lösung zusätzliches Oxidationspotential aufgrund des in den Lösungen zusätzlich enthaltenen Hydrogensulfatradikals (vgl. vorstehende Summengleichung (2)) oder eines daraus resultierenden Folgeproduktes auf.

Die erfindungsgemäßen Chlordioxidlösungen sind dauerhaft, mindestens aber ein Jahr lagerfähig bzw. haltbar, d.h. es ist innerhalb dieses Zeitraums keine nennenswerte Zersetzung des Chlordioxids zu beobachten. Vorzugsweise sind die erfindungsgemäßen Chlordioxidlösungen unbegrenzt lagerfähig. Um die Lagerstabilität der erfindungsgemäßen Chlordioxidlösungen zu erhöhen, werden diese vorzugsweise gekühlt aufbewahrt, vorzugsweise bei einer Temperatur im Bereich von größer als 0°C bis etwa 25°C, besonders bevorzugt im Bereich von etwa 2°C bis etwa 20°C, ganz besonders bevorzugt im Bereich von etwa 5°C bis etwa 15°C.

Weiterhin ist es vorteilhaft, dass die erfindungsgemäßen Chlordioxidlösungen unter Lichtausschluss aufbewahrt werden. Da aber überraschenderweise festgestellt wurde, dass Chlordioxid in wässriger Lösung deutlich stabiler gegen UV-Strahlung bzw. Sonnenlicht als in der Gasphase ist, ist es gemäß einer bevorzugten Ausführungsform ausreichend, die über der Lösung stehende Gasphase innerhalb des Behälters, in welchem die Lösungen aufbewahrt werden, vor Lichteinfall zu schützen. Dazu kann beispielsweise eine lichtundurchlässige Folie oder aber ein lichtundurchlässiger Behälter bzw. ein lichtundurchlässiges Gebinde verwendet werden.

Die erfindungsgemäßen wässrigen Lösungen von Chlordioxid sind echte Lösung von Chlordioxid in Wasser, wobei das Chlordioxid nicht hydrolysiert. Der Dampfdruck der Lösungen richtet sich nach dem Henry-Gesetz, d.h. die Summe der Partialdrucke ergibt den Gesamtdruck. Der Dampfdruck des Chlordioxids ist temperaturabhängig und nimmt mit zunehmender Temperatur zu. Chlordioxid in reiner, nicht wässriger Form hat bei 1013 mbar einen Siedepunkt von 11°C. In Wasser ist Chlordioxid in erstaunlich hohen Konzentrationen löslich, ohne dass es mit Wasser reagiert. Mit steigender Umgebungstemperatur sinkt die Wasserlöslichkeit und Chlordioxid verhält sich in der Gasphase zunehmend wie ein ideales Gas, wobei sich das Chlordioxid in der Gasphase über der wässrigen Chlordioxidlösung umso realer verhält, je näher sich die Umgebungstemperatur dem Siedepunkt annähert oder diesen sogar unterschreitet.

Es ist aber aus verschiedenen Gründen wünschenswert, den Dampfdruck der erfindungsgemäßen Chlordioxidlösungen so gering wie möglich zu halten. So führt ein hoher Dampfdruck an Chlordioxid dazu, dass ein Teil des Chlordioxids aus der Lösung entweicht, was die Konzentration an einsetzbarem Chlordioxid verringert. Dies kann insbesondere dann zu signifikanten Verlusten an Chlordioxid führen, wenn der Aufbewahrungsbehälter für die erfindungsgemäße Chlordioxidlösung beispielsweise belüftet oder offen ist. Auf diese Weise kann das Chlordioxid nach und nach aus der Lösung in die Gasphase übergehen und dann aus dem Behälter entweichen. Darüber hinaus ist das Chlordioxid in der Gasphase weniger stabil gegen UV-Strahlung bzw. Sonnenlicht als in gelöster Form. Folglich kann es mit zunehmendem Anteil an Chlordioxid in der Gasphase zu vermehrten Zersetzungsreaktionen kommen, was die Konzentration und Reinheit des Chlordioxids in der erfindungsgemäßen Lösung verringert. Darüber hinaus ist Chlordioxid in der Gasphase aufgrund seiner Neigung zur Explosion deutlich gefährlicher und damit schwieriger zu handhaben.

Daher ist es vorteilhaft, die erfindungsgemäßen wässrigen Chlordioxidlösungen unterhalb ihrer Siedetemperatur von 11°C zu lagern, insbesondere bei einer Temperatur im Bereich von größer als 0°C bis 11°C, besonders bevorzugt bei einer Temperatur im Bereich von 5°C bis 11°C.

Aber auch die Verwendung eines Überdrucks ist vorteilhaft hinsichtlich der Verminderung des Dampfdruckes von Chlordioxid. Beispielsweise können die erfindungsgemäßen Chlordioxidlösungen mit einem Überdruck von etwa 0,01 bis etwa 10 bar, gegebenenfalls unter Inertgasen wie Stickstoff oder ähnlichem, vorzugsweise im Bereich von etwa 0,1 bis etwa 1 bar, beaufschlagt werden, wodurch der Dampfdruck von Chlordioxid weiter reduziert wird. Aber auch Überdrucke bei Temperaturen oberhalb des Siedepunktes führen zu einem ähnlichen Ergebnis. Somit können die erfindungsgemäßen Lösungen auch bei Temperaturen bis zu 40°C gelagert werden, sofern die Lösungen gleichzeitig mit einem geeigneten Überdruck beaufschlagt werden, um die Menge an Chlordioxid in der Gasphase zu vermindern.

Es hat sich somit erfindungsgemäß herausgestellt, dass Chlordioxidlösungen, sowohl erfindungsgemäße als auch herkömmliche, vorteilhaft in einem Behälter unter Druck gelagert werden können. Der Druck ist bevorzugt 0,01 bis etwa 10 bar, vorzugsweise im Bereich von etwa 0,1 bis etwa 1 bar.

In einer besonders bevorzugten Ausführungsform der erfindungsgemäßen Chlordioxidlösungen werden diese bei einer Temperatur im Bereich von größer als 0°C bis etwa 15°C bei gleichzeitiger Druckbeaufschlagung im Bereich von etwa 0,1 bar bis etwa 1 bar gelagert.

In einer weiteren bevorzugten Ausführungsform der vorliegenden Erfindung können die Chlordioxidlösungen auch unter einer Inertgasatmosphäre aufbewahrt werden.

Als geeignete Behälter kommen beispielsweise herkömmliche Kunststoff- oder Metallkanister, Schnappdeckelflaschen, Fässer, Glasflaschen und ähnliches in Frage. Bezüglich des Materials gibt es keinerlei Beschränkungen, solange sich dieses gegenüber Chlordioxid inert verhält und weitestgehend korrosionsbeständig ist. Vorzugsweise werden Behälter aus Glas, Metall oder Kunststoff, insbesondere aus HDPE, LDPE, PVC, PTFE oder Mischpolymeren, verwendet. In einer bevorzugten Ausführungsform der vorliegenden Erfindung ist der zum Mischen, Transport und/oder Lagerung der Lösungen vorgesehene Behälter lichtundurchlässig.

In Bezug auf die Behälter zur Aufbewahrung der erfindungsgemäßen Chlordioxidlösungen ist ebenfalls wieder das Henry-Gesetz zu beachten, welches die temperaturabhängigen Verhältnisse der Löslichkeiten von Chlordioxid in der Gasphase und in der Flüssigkeit nach Gleichgewichtseinstellung beschreibt. Insbesondere findet man rein rechnerisch bei niedrigeren Füllständen, beispielsweise nach einem teilweisen Verbrauch der erfindungsgemäßen Chlordioxidlösungen, in dem Behälter mehr Chlordioxid in der Gasphase als in der Flüssigkeit. Daraus erklären sich in der Regel auch die Hauptverluste an Wirkstoff in Chlordioxidlösungen. Undichtigkeiten in den Vorratsgefäßen führen zum ständigen Nachregulieren des Gleichgewichtes und somit zum kompletten Verlust des Wirkstoffes. Die Geschwindigkeit der Gleichgewichtseinstellung richtet sich auch nach der vorhandenen Oberfläche, wobei der Übergang des Chlordioxids aus der Flüssigkeit in die Gasphase von der Oberfläche der Lösung und insbesondere dem freien Gasraum darüber abhängt. Wird die Oberfläche eines ansonsten geschlossenen Behälters abgedeckt, z.B. durch einen mehr oder weniger eng aufliegenden Schwimmkörper, so reduziert sich die Geschwindigkeit der Gleichgewichtseinstellung des Chlordioxids in der Gasphase zur Flüssigkeit erheblich. Daher umfasst der zur Lagerung und/oder zum Transport der erfindungsgemäßen Lösung vorgesehene Behälter vorzugsweise einen Schwimmkörper. Auf diese Weise ist es möglich, die Oberfläche der Chlordioxidlösung bei niedrigen Füllständen insoweit zu reduzieren, dass der Dampfdruck des Chlordioxids gering bleibt und auch Restbefüllungen sicher genutzt werden können.

Der pH-Wert der durch das erfindungsgemäße Verfahren erhaltenen Chlordioxidlösungen liegt in einer Ausführungsform im Bereich von etwa 2 bis etwa 4 und vorzugsweise im Bereich von etwa 2,5 bis 3. Dieser pH-Bereich ist insbesondere vorteilhaft im Hinblick auf die Stabilität der erfindungsgemäßen Lösung. Im Gegensatz dazu weisen herkömmliche Chlordioxidlösungen üblicherweise einen pH-Wert von größer als 4 auf, wobei dieser pH-Wert durch ein geeignetes Puffersystem erreicht wird. Gemäß einer Ausführungsform der vorliegenden Erfindung enthält diese Chlordioxidlösung keinen Puffer. In einer bevorzugten Ausführungsform enthält diese erfindungsgemäße Chlordioxidlösung keine weiteren Komponenten, ausgewählt aus der Gruppe, bestehend aus Aktivatoren, Katalysatoren und Stabilisatoren.

Die durch das erfindungsgemäße Verfahren erhältliche Chlordioxidlösung kann neben Chlordioxid mindestens ein weiteres Radikal enthalten. Aus der Summengleichung (2) wird dabei deutlich, dass angenommen wird, dass durch die Umsetzung von einem Äquivalent Chlorit mit einem Äquivalent Peroxodisulfat neben einem Äquivalent Chlordioxid auch ein Äquivalent eines Hydrogensulfatradikals gebildet wird, wie vorstehend beschrieben. Dementsprechend ist das weitere Radikal vorzugsweise ein Hydrogensulfatradikal oder ein Folgeprodukt von diesem, welches durch Reaktion mit dem Hydrogensulfatradikal erhalten wurde.

Aufgrund des in der Lösung vorhandenen weiteren Radikals umfasst diese Chlordioxidlösung ein weiteres starkes Oxidationsmittel und weist damit eine zusätzliche oxidierende Wirkung auf, durch welche die autokatalytische Zersetzung unterdrückt oder reduziert wird. Aufgrund dessen ist diese Chlordioxidlösung im Vergleich zu herkömmlichen Chlordioxidlösungen von Vorteil.

Ferner beschrieben ist ein Kit, welches neben der erfindungsgemäßen Chlordioxidlösung ein separates geeignetes Reduktionsmittel, wie eine separate Sulfit-, Disulfit-, Thiosulfat-, Sulfid- oder Nitritlösung, umfasst. Vorzugsweise ist die Sulfitlösung eine Natriumsulfitlösung. Alternativ kann auch festes Sulfit verwendet werden. Die erfindungsgemäßen Chlordioxidlösungen lassen sich durch Zugabe ausreichender Mengen an Sulfit auf einfache und sichere Weise in kurzer Zeit vernichten. Die Zugabe einer wässrigen Natriumsulfitlösung zu der erfindungsgemäßen Chlordioxidlösung vernichtet das in Wasser- und Luftphase enthaltene Chlordioxid augenblicklich. Der Einsatz des Kits vereinfacht den Transport, die Handhabung sowie die Vernichtung des Chlordioxids und ermöglicht ein gefahrloses Handhaben der erfindungsgemäßen Chlordioxidlösung. Das Vernichtungskit ermöglicht zudem im Gebrauch die Anwendung von Lösungen mit höheren Konzentrationen an Chlordioxid mit anschließender definierter Entgiftung. Die Vernichtung des Chlordioxids hat den weiteren Vorteil, dass lediglich ungiftiges Chlorid und im Falle der Verwendung von Sulfit, ungiftiges Sulfat gebildet wird.
Die vorliegende Erfindung betrifft ferner die Verwendung der vorstehend beschriebenen wässrigen Chlordioxidlösung als Desinfektionsmittel, als Oxidations- oder Bleichmittel und/oder als Desodorierungsmittel. Die erfindungsgemäßen Chlordioxidlösungen können dabei beispielsweise zur Desinfektion von Luft, Boden und Wasser, wie Trinkwasser, Badewasser, Abwasser, Brauchwasser, etc., in der Medizin, in Filtern oder von Biofilmen verwendet werden. Ferner können die erfindungsgemäßen Chlordioxidlösungen als Oxidations- bzw. Bleichmittel beispielsweise in verschiedenen technischen Verfahren, wie Papierherstellung, Lebensmittelherstellung, etc., in der Bearbeitung von Abfällen und Klärschlämmen, oder in Reinigungsmittel verwendet werden. Die erfindungsgemäßen Chlordioxidlösungen können weiterhin als Desodorierungsmittel beispielsweise in der Geruchsbekämpfung, wie in einem Abwasserkanal, in Industrieprozessen, im Haushalt, etc., in Feststoffen, Suspensionen und Reinigungsmitteln verwendet werden. Die vorstehend genannten Anwendungen sollen aber keine abschließende Auflistung darstellen. Vielmehr können die erfindungsgemäßen Chlordioxidlösungen in allen geeigneten Bereichen zur Anwendung kommen, in denen ihre desinfizierende, oxidierende und desodorierende Wirkung nützlich ist.
Die erfindungsgemäße Chlordioxidlösung kann weiterhin verwendet werden, um Chlordioxid aus dieser Lösung durch Extraktion mit organischen Lösungsmitteln wie Ether, Kohlenwasserstoffen etc. quantitativ in organische Lösungsmittel zu überführen. Damit ist das Chlordioxid für weitere, auf geeignete organische Lösungsmittel beschränkte Reaktionen zugänglich. Damit kann es in Arbeitsbereichen zum Einsatz kommen, wo Wasser hinderlich oder kontraproduktiv ist (beispielsweise wegen Korrosion auf Grund von Luftfeuchtigkeit etc.).
Die durch das erfindungsgemäße Verfahren erhältliche wässrige Chlordioxidlösung kann ferner zur Desinfektion von Trink- und Badewässern oder zur Aufbereitung von Brauch- und Abwässern verwendet werden.
Die durch das erfindungsgemäße Verfahren erhältliche wässrige Chlordioxidlösung kann ferner zur Desinfektion von Trink- und Badewässern, zur Aufbereitung von Brauch- und Abwässern oder zur effektiven Bekämpfung von Biofilmen verwendet werden, wobei die Lösung Chlordioxid zusammen mit dem Hydrogensulfatradikal in Form eines Radikalpaar-Assoziats umfasst.
Im Folgenden sind nochmals besonders bevorzugte Verwendungen der erfindungsgemäßen Chlordioxidlösungen aufgeführt. So können die erfindungsgemäßen Chlordioxidlösungen in technischen Prozessen verwendet werden.
Exemplarisch genannte technische Prozesse umfassen die zerstörungsfreie Hygienisierungen (Entkeimung) von Membrananlagen, beispielsweise von RO-Anlagen, auch im Medizinbereich; die Moosentfernung auf jeglichen Arten an Werkstoffen; die Belagsentfernung, beispielsweise auf Fahrzeugen, Schiffen, Flugzeugen; die Geruchsbekämpfung in Produktionsprozessen; die industrielle Abwasseraufbereitung durch Entkeimung des Abwassers, physikalisch-chemische Wasserabtrennung und Reststoffwiederverwertung; der Korrosionsschutz in Abwasser führenden Systemen; der Oberflächenschutz von Lacken, Beschichtungen jeglicher Art, Kunststoffen, Holz, Metall, Keramik, Stein; die Keimentfernung mit Langzeitwirkung; die Entgiftung von Flächen und Räumen (Gasphase); die Luftreinhaltung; kosmetische oder medizinischen Anwendungen, beispielsweise als Mundwasser, zur Warzenbehandlung, zur Milbenentfernung, zur gezielten Zellenzerstörung, zur äußerlichen und innerlichen Anwendung oder zur Anwendung gegen pathogene Keime; die Oxidation von Reststoffen (Medikamente, Röntgenkontrastmittel, Oxidationsprodukte, Cyanide, etc.) im Abwasser (AOP) hinter Kläranlagen; die Oxidation von gasförmigen Produkten (H₂S, NO, NO₂ sowie organische Stoffe); sowie die Sterilisation bei Niedrigtemperaturen, z.B. OP-Material. Die erfindungsgemäßen Chlordioxidlösungen können ebenfalls zur oxidativen Schwermetallaufbereitung verwendet werden.

Weiterhin können die erfindungsgemäßen Chlordioxidlösungen zur Behandlung von Trinkwasser verwendet werden, beispielsweise in Wasserwerken zur permanenten Trinkwasserdesinfektion, zum Abbau des Biofilms in Wasserrohrleitungen in Form einer Standdesinfektion oder in Form einer Permanentdesinfektion. Darüber können die Chlordioxidlösungen zur Notchlorung bzw. Desinfektion von Trinkwasser verwendet werden, beispielsweise nach Starkregen, nach Verkeimungseinbruch (z.B. nach einer bakteriellen Verseuchung eines Trinkwasser-Reservoirs von Grund-, Oberflächen- oder Brachwasser und zur Beseitigung pathogener Keime, beispielsweise Antrax, Cholera, etc.) oder nach Naturkatastrophen, um auf diese Weise desinfiziertes Trinkwasser bereitzustellen bzw. um eine Trinkwasserversorgung auch aus Oberflächenwasser schlechter Qualität aufrecht zu erhalten. Schließlich können die Chordioxidlösungen in Gebäuden (z.B. Kliniken, Krankenhäusern, Altersheimen, Verwaltungsgebäuden, Bürogebäuden, Wohngebäuden), Schwimmbädern, Fahrzeugen (z.B. Autos, Eisenbahnen, Schiffen, Flugzeugen) zur Desinfektion von Warm- und Kaltwasserleitungen, Klimaanlagen, Wasseraufbereitungsanlagen, Boilern, Abwassersystemen oder des Badewassers in Pools verwendet werden, um auf diese Weise insbesondere Legionellen und andere Keime sowie Biofilme zu entfernen bzw. um die Bildung von Biofilmen zu unterdrücken. Vorzugsweise wird die erfindungsgemäße Chlordioxidlösung in Form einer Standdesinfektion oder in Form einer Permanentdesinfektion zur Entfernung von Biofilmen, Legionellen oder anderen Keimen in Trinkwasserleitungen, Klimaanlagen, Wasseraufbereitungsanlagen, Boilern oder Pools verwendet.

Weitere geeignete Anwendungen in diesem Bereich stellen der Ersatz für Notdesinfektionen, die Desinfektion von Erd- und Hochtanks, die Desinfektion von Armaturen und Rohrleitungen, die Desinfektion nach Rohrbruch, die Notdesinfektion nach Wiederverkeimungen, die Biofilmbekämpfung und Biofilmprophylaxe, die Abwasseraufbereitung von medikamentösen Rückständen sowie die Beseitigung multiresistenter Keime dar.

In Klimaanlagen und Kühltürmen können die erfindungsgemäßen Chlordioxidlösungen zur Beseitigung des Biofilms aus Wärmetauschern und Rohrleitungen, zur Beseitigung von Verkeimungen, wie beispielsweise Legionellen, zur Stand-, Permanent- oder Stossdesinfektion und zum Korrosionsschutz verwendet werden.

In der Lebensmittelproduktion können die erfindungsgemäßen Chlordioxidlösungen zur Wasseraufbereitung des Produktions- und Spülwassers, zur Aufrechterhaltung der Hygiene im Produktionsprozess, zur Entkeimung von Transportfahrzeugen, zur Tieraufzucht, zur Beseitigung, Bekämpfung und Prophylaxe von Infektionsherden, und zur Aufrechterhaltung der Hygiene im Schlachtbereich, beispielsweise während der Verarbeitung, Verpackung oder Reinigung verwendet werden.

Bei Obst, Früchten und Saatgut können die erfindungsgemäßen Chlordioxidlösungen zur Aufrechterhaltung der Hygiene während der Wachstumsphase, während und nach der Ernte, zur Aufrechterhaltung der Hygiene in der Verarbeitung, während der Verpackung zur Verlängerung der Haltbarkeit, zur Aufrechterhaltung der Lagerhygiene von Saatgut, zur Verhinderung der Keimfähigkeit von Saatgut, zur Desinfektion oder zur Sterilisation mit nachhaltiger Wirkung verwendet werden.

Bei Eisenbahnen, Flugzeugen oder Schiffen können die erfindungsgemäßen Chlordioxidlösungen zur Aufrechterhaltung der Hygiene der Sanitärbereiche, Klimaanlagen, zur Geruchsbekämpfung, zur lang anhaltenden ökologischen Vegetationsentfernung, beispielsweise der Schienenbereiche, von Beschilderungen, u.s.w., zur Desinfektion von Schiffen, zur Abwasseraufbereitung, zur Behandlung von Grau-, Gelb- oder Schwarzwasser, zur Entkeimung des Trimmwassers und zur Trinkwassergewinnung aus Seewasser verwendet werden.

Besonders gut lassen sich die erfindungsgemäßen Chlordioxidlösungen zur Geruchsentfernung z.B. in Abwasser führenden Systemen, auch Kanälen, anwenden. Es dient weiter in diesen Abwasser führenden Systemen als Korrosionsschutz, weil es nachhaltig den Faulungsprozess stoppt. Die Biofilmentfernung mit dieser Lösung kann sehr gut als Oberflächenschutz für Lacke, Beschichtungen jeglicher Art, Kunststoffen, Holz, Metall, Keramik, Stein angewendet werden. Dabei ist die angewendete Lösung besonders nachhaltig wirksam mit Langzeitwirkung. Die Langzeitwirkung ist Resultat der vollständigen Entfernung des Biofilms von der Oberfläche. Ebenso kann die Lösung zur Entgiftung von Flächen und Räumen (Gasphase), auch zur Luftreinhaltung eingesetzt werden. Die Chlordioxidlösung kann zur dauerhaften Reinigung, Desinfektion sowie Sterilisation von Membranen eingesetzt werden. Die stabilen Radikale erlauben weiter den Einsatz in medizinischen Anwendungen, z.B. als Mundwasser, zur Warzenbehandlung, Milbenentfernung, gezielte Zellenzerstörung, weiter allgemein zur äußeren Desinfektion und zur Zerstörung von Krankheitserregern.

Die vorliegende Erfindung betrifft ferner eine Vorrichtung zur Herstellung der vorstehend beschriebenen Chlordioxidlösung. Dieser Vorrichtung zur Herstellung der erfindungsgemäßen Chlordioxidlösung liegt der Gedanke zugrunde, dass das erfindungsgemäße Verfahren zur Herstellung einer Chlordioxidlösung nicht nur großindustriell durchgeführt werden kann, sondern auch zur Anwendung in kleineren Maßstäben geeignet ist. Daher kann eine entsprechende Vorrichtung zur Durchführung des erfindungsgemäßen Verfahrens beispielsweise auch in Ein- oder Mehrfamilienhäusern vorhanden sein, um dort die beispielsweise zur Desinfektion von Trink- und Badewässern benötigten Mengen an Chlordioxid kontinuierlich zur Verfügung zu stellen.

Vor diesem Hintergrund umfasst die erfindungsgemäße Vorrichtung (1) zur Herstellung der erfindungsgemäßen Chlordioxidlösung
(a) zumindest einen Vorratsbehälter für eine Chloritkomponente (2),
(b) zumindest einen Vorratsbehälter für eine Peroxodisulfatkomponente (3),
(c) zumindest einen Mischbehälter (4), welcher über eine Zuführleitung für die Chloritkomponente (5) mit dem zumindest einen Vorratsbehälter für eine Chloritkomponente (2) verbunden oder verbindbar ist, und welcher über eine Zuführleitung für die Peroxodisulfatkomponente (6) mit dem zumindest einen Vorratsbehälter für eine Peroxodisulfatkomponente (3) verbunden oder verbindbar ist,
(d) zumindest einen Vorratsbehälter für die Chlordioxidlösung (7), welcher über zumindest eine Zuführleitung für die Chlordioxidlösung (16) mit dem Mischbehälter (4) verbunden oder verbindbar ist,
(e) eine Dosiervorrichtung (18), welche an dem zumindest einen Vorratsbehälter für die Chlordioxidlösung (7) angebracht ist, und
(f) einen Schwimmkörper (20), der eingerichtet ist, die Oberfläche der Chlordioxidlösung in dem Vorratsbehälter (7) abzudecken.

Die erfindungsgemäße Vorrichtung wird nachfolgend mit Bezug auf die begleitende Zeichnung einer bevorzugten Ausführungsform beispielhaft beschrieben, da die Aufgaben, Merkmale und Vorteile der erfindungsgemäßen Vorrichtung einfacher anhand der folgenden detaillierten Beschreibung sowie der begleitenden Zeichnung zu verstehen sind. Dabei sollte diese so verstanden werden, dass die in der Zeichnung dargestellte Ausführungsform auch mit lediglich bevorzugten Merkmalen dargestellt ist, die nicht zwingend vorliegen müssen.

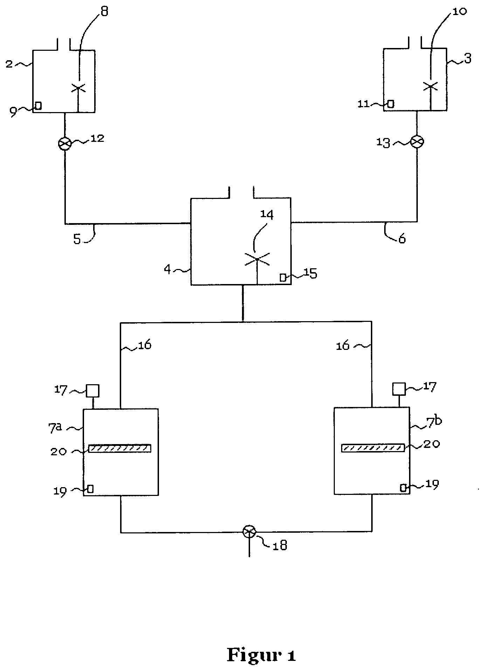

Figur 1 zeigt eine bevorzugte Ausführungsform der erfindungsgemäßen Vorrichtung zur Herstellung einer Chlordioxidlösung.

Die Vorrichtung 1 umfasst dabei einen Vorratsbehälter für eine Chloritkomponente 2. Dieser Vorratsbehälter 2 ist derart gestaltet, dass dieser die Chloritkomponente beispielsweise in fester Form und als wässrige Lösung bevorraten kann. In einer bevorzugten Ausführungsform der erfindungsgemäßen Vorrichtung kann der Vorratsbehälter 2 eine Misch- bzw. Rührvorrichtung 8 umfassen, so dass in dem Vorratsbehälter 2 eine wässrige Chloritkomponente durch Auflösen von festem Chlorit in Wasser erzeugt werden kann, wobei dieses Auflösen durch die Misch- bzw. Rührvorrichtung 8 erleichtert wird. In einer weiteren bevorzugten Ausführungsform enthält der Vorratsbehälter 2 eine oder mehrere Messzellen 9, welche eingerichtet sind, die Menge bzw. Konzentration an Chlorit in dem Vorratsbehälter 2 zu bestimmen. Dies können beispielsweise geeignete Messzellen für die Leitfähigkeit, für den pH-Wert, für den Redoxwert, amperometrische Messzellen oder Kombinationen davon sein.

Die Vorrichtung 1 umfasst ferner einen Vorratsbehälter für eine Peroxodisulfatkomponente 3. Dieser Vorratsbehälter 3 ist derart gestaltet, dass dieser die Peroxodisulfatkomponente beispielsweise in fester Form und als wässrige Lösung bevorraten kann. In einer bevorzugten Ausführungsform der erfindungsgemäßen Vorrichtung kann der Vorratsbehälter 3 eine Misch- bzw. Rührvorrichtung 10 umfassen, so dass in dem Vorratsbehälter 3 eine wässrige Peroxodisulfatkomponente durch Auflösen von festem Peroxodisulfat in Wasser erzeugt werden kann, wobei dieses Auflösen durch die Misch- bzw. Rührvorrichtung 10 erleichtert wird. In einer weiteren bevorzugten Ausführungsform enthält der Vorratsbehälter 3 eine oder mehrere Messzellen 11, welche geeignet sind, die Menge bzw. Konzentration an Peroxodisulfat in dem Vorratsbehälter 3 zu bestimmen. Dies können beispielsweise geeignete Messzellen für die Leitfähigkeit, für den pH-Wert, für den Redoxwert, amperometrische Messzellen oder Kombinationen davon sein.

Die Vorrichtung 1 umfasst ferner einen Mischbehälter 4, welcher über eine Zuführleitung für die Chloritkomponente 5 mit dem zumindest einen Vorratsbehälter für eine Chloritkomponente 2 verbunden oder verbindbar ist, und welcher über eine Zuführleitung für die Peroxodisulfatkomponente 6 mit dem zumindest einen Vorratsbehälter für eine Peroxodisulfatkomponente 3 verbunden oder verbindbar ist. Die Zuführleitungen 5 und 6 sind eingerichtet, die Chlorit- bzw. Peroxodisulfatkomponente aus den Vorratsbehältern 2 und 3 dem Mischbehälter 4 zuzuführen. In einer bevorzugten Ausführungsform sind die Zuführleitungen 5 und 6 mit Dosiervorrichtungen 12 und 13 versehen, welche eingerichtet sind, die Menge an zuzuführendem Chlorit bzw. Peroxodisulfat zu regeln und auch die Zuführung von Chlorit bzw. Peroxodisulfat vollständig zu unterbrechen. In einer besonders bevorzugten Ausführungsform sind die Zuführleitungen 5 und 6 mit Dosiervorrichtungen 12 und 13 versehen, welche eingerichtet sind, die Menge an zuzuführendem Chlorit und Peroxodisulfat derart zu regeln, dass Peroxodisulfat und Chlorit in einem Verhältnis [S₂O₈²⁻] / [ClO₂⁻] von größer als 1 dem Mischbehälter 4 zugeführt wird.

Der Mischbehälter 4 umfasst vorzugsweise eine Misch- bzw. Rührvorrichtung 14, welche eingerichtet ist, die zugeführte Chlorit- und Peroxodisulfatkomponente miteinander zu vermischen. Ferner umfasst der Mischbehälter 4 vorzugsweise eine oder mehrere Messzellen 15, welche eingerichtet sind, die Menge bzw. Konzentration an Chlordioxid und/oder an Chlorit und Peroxodisulfat im Mischbehälter 4 zu bestimmen. Durch die entsprechenden Messzellen 15 ist es möglich, den Verlauf der Umsetzung von Chlorit und Peroxodisulfat zu Chlordioxid zu verfolgen. Weiterhin ist der Mischbehälter 4 vorzugsweise derart eingerichtet, dass diesem Wasser zugeführt werden kann. Dies ist insbesondere dann von Bedeutung, wenn beide Komponenten in fester Form dem Mischbehälter 4 zugeführt werden.

Weiterhin umfasst die erfindungsgemäße Vorrichtung 1 einen oder mehrere Vorratsbehälter für die Chlordioxidlösung 7. In einer bevorzugten Ausführungsform umfasst die erfindungsgemäße Vorrichtung 1 mindestens zwei Vorratsbehälter für die Chlordioxidlösung 7a und 7b. Der mindestens eine Vorratsbehälter 4 ist über zumindest eine Zuführleitung 16 mit dem Mischbehälter 4 verbunden oder verbindbar. Der zumindest eine Vorratsbehälter 7 ist eingerichtet, die durch das erfindungsgemäße Verfahren hergestellte Chlordioxidlösung zu bevorraten, bis diese für die konkrete Anwendung benötigt wird. In einer bevorzugten Ausführungsform der erfindungsgemäßen Vorrichtung ist der zumindest eine Vorratsbehälter 4 mit einer Vorrichtung zur Druckregelung 17 versehen, welche eingerichtet ist, den Druck in dem zumindest einen Vorratsbehälter 7 zu messen sowie den zumindest einen Vorratsbehälter 7 mit Druck beaufschlagen. Dies ist hinsichtlich der Verringerung des Dampfdrucks der Chlordioxidlösung vorteilhaft. Der zumindest eine Vorratsbehälter 7 umfasst weiterhin auch einen Schwimmkörper 20, der eingerichtet ist, die Oberfläche der Chlordioxidlösung in dem Vorratsbehälter 7 abzudecken. Dies ist insbesondere bei niedrigen Füllständen des Vorratsbehälters vorteilhaft im Hinblick auf eine Verringerung des Dampfdrucks der Chlordioxidlösung.

Weiterhin umfasst die erfindungsgemäße Vorrichtung 1 eine Dosiervorrichtung 18, welche an dem zumindest einen Vorratsbehälter für die Chlordioxidlösung 7 angebracht ist. Diese Dosiervorrichtung 18 ist eingerichtet, die Entnahme der Chlordioxidlösung von dem zumindest einen Vorratsbehälter 7 zu regeln. Die Dosiervorrichtung 18 kann beispielsweise eine Dosierpumpe sein. Umfasst die Vorrichtung 1 mindestens zwei Vorratsbehälter für die Chlordioxidlösung 7a und 7b, so ist es vorteilhaft, dass die Dosiervorrichtung 18 derart gestaltet ist, dass mit dieser entweder von dem Vorratsbehälter 7a oder von dem Vorratsbehälter 7b Chlordioxidlösung entnommen werden kann. Ferner umfasst der Vorratsbehälter 7 vorzugsweise eine oder mehrere Messzellen 19, welche eingerichtet sind, die Menge bzw. Konzentration an Chlordioxid und/oder an Chlorit und Peroxodisulfat im Vorratsbehälter 7 zu bestimmen. Dadurch ist es möglich, jederzeit die Konzentration an Chlordioxid sowie dessen Reinheit in der Chlordioxidlösung zu bestimmen.

Die erfindungsgemäße Vorrichtung ermöglicht, Chlordioxidlösung in variablen Mengen herzustellen und bereitzuhalten. Die Lagerung in zumindest zwei verschiedenen Vorratsbehältern 7a und 7b ermöglicht darüber hinaus die kontinuierliche Entnahme von fertiger Chlordioxidlösung. So kann beispielsweise während der Entnahme der Lösung aus Vorratsbehälter 7a der Vorratsbehälter 7b wieder aufgefüllt werden und umgekehrt.

In einer bevorzugten Ausführungsform umfasst die erfindungsgemäße Vorrichtung ferner einen Reifebehälter, welcher zwischen dem Mischbehälter 4 sowie dem Vorratsbehälter 7 angeordnet ist. Dieser Reifebehälter ist vorteilhaft derart eingerichtet, dass er die in dem Mischbehälter 4 vereinigten Lösungen aufnimmt und solange beherbergt, bis die Umsetzung von Chlorit und Peroxodisulfat zu Chlordioxid vervollständigt ist. In einer besonders bevorzugten Ausführungsform umfasst der Reifebehälter ebenfalls eine Vorrichtung zur Druckregelung.

Weiterhin umfasst die erfindungsgemäße Vorrichtung vorzugsweise eine automatisierte Prozesssteuerungseinheit, die beispielsweise mit den Messzellen 9, 11, 15 und 19, den Vorrichtungen zur Druckregelung 17 sowie den Dosiervorrichtungen 12 und 13 verbunden oder verbindbar ist. Durch diese automatisierte Prozesssteuerungseinheit kann beispielsweise die Menge und die Konzentration der herzustellenden Chlordioxidlösung durch Steuerung der zuzuführenden Mengen an Chlorit und Peroxodisulfat geregelt werden.

In einer weiteren bevorzugten Ausführungsform ist die erfindungsgemäße Vorrichtung 1 derart eingerichtet, dass die Herstellung sowie die Lagerung der Chlordioxidlösung unter Lichtausschluss erfolgt. Dies kann beispielsweise dadurch erfolgen, dass die Behälter und Zuführleitungen lichtundurchlässig ausgestaltet sind. Es ist aber auch möglich, dass die Vorrichtung 1 in einem Kasten bzw. in einer Box angeordnet ist, welche lichtundurchlässig ist.

In einer weiteren bevorzugten Ausführungsform ist die erfindungsgemäße Vorrichtung 1 temperierbar. Dabei ist es besonders bevorzugt, dass die Vorrichtung 1 derart eingerichtet ist, dass insbesondere das Mischen der beiden Ausgangsprodukte sowie die Lagerung der fertigen Chlordioxidlösungen bei Temperaturen im Bereich von etwa 0°C bis etwa 25°C erfolgen kann. Dies kann beispielsweise durch geeignete Kühlvorrichtungen erfolgen, welche die einzelnen Misch- bzw. Vorratsbehälter kühlen. Es ist aber auch möglich, dass die gesamte Vorrichtung 1 in einer Art Kühlschrank angeordnet ist.

In einer weiteren bevorzugten Ausführungsform ist die erfindungsgemäße Vorrichtung 1 eingerichtet, um die Chlordioxidlösung kontinuierlich im Durchflussbetrieb herzustellen. In einer anderen bevorzugten Ausführungsform ist die erfindungsgemäße Vorrichtung 1 eingerichtet, um die Chlordioxidlösung chargenweise im Batch-Betrieb herzustellen.

In einer bevorzugten Ausführungsform ist die erfindungsgemäße Vorrichtung zur Verwendung als Kleinanlage in einem Ein- oder Mehrfamilienhaus eingerichtet. Dies ist beispielsweise vorteilhaft, um dort die zur Desinfektion von Trink- und Badewässern benötigten Mengen an Chlordioxid kontinuierlich oder batchweise bei Bedarf zur Verfügung zu stellen. In einer weiteren bevorzugten Ausführungsform ist die erfindungsgemäße Vorrichtung zur Herstellung einer Chlordioxidlösung transportabel eingerichtet, indem sie in einem Gehäuse untergebracht ist. Das Gehäuse kann jedwedes zum Transport geeignete Gehäuse sein, beispielsweise ein Metall- oder Kunststoffgehäuse. Vorzugweise ist die transportable Vorrichtung eine Vorrichtung mit einem Gewicht von weniger als 500 kg, besonders bevorzugt von weniger als 100 kg. Auf diese Weise ist es möglich, die erfindungsgemäße Vorrichtung zu transportieren und somit das erfindungsgemäße Verfahren erst am Ort der Verwendung der Chlordioxidlösung anzuwenden. Dies kann beispielsweise in Form von Kleinanlagen in einem Ein- oder Mehrfamilienhaus sein.

In einer anderen bevorzugten Ausführungsform ist die erfindungsgemäße Vorrichtung zur Verwendung als großindustrielle Anlage, beispielsweise als Tankanlage, eingerichtet. Dies ist beispielsweise vorteilhaft, um die erfindungsgemäße Chlordioxidlösung in großen Mengen herzustellen und dann gegebenenfalls in kleinere Behälter abzufüllen und zu vertreiben bzw. zu transportieren. Dies hat den Vorteil, dass die erfindungsgemäße Chlordioxidlösung nicht vor Ort hergestellt werden braucht.

Die Erfindung wird nunmehr anhand von Beispielen näher erläutert.

### Beispiele

### Analytik:

Die Konzentration an Chlordioxid in den erfindungsgemäßen Chlordioxidlösungen kann durch verschiedene Meßmethoden bestimmt werden. Insbesondere kann die Konzentration an Chlordioxid amperometrisch, photometrisch, iodometrisch, durch Titration der Chlordioxidlösung mit einer Sulfitlösung oder ionenchromatographisch bestimmt werden.

Die Analysemethoden sind ausführlich in den Arbeitsblättern des Deutschen Vereins des Gas- und Wasserfaches (DVGW) W224 (Februar 2010), Seite 18ff unter Bezug auf die DIN 38408-5 beschrieben.

In den folgenden Beispielen wurden insbesondere die Photometrie zur Bestimmung der Chlordioxidkonzentration sowie die Ionenchromatographie zur Bestimmung der weiteren Anteile, wie Chlorit, Chlorat, Perchlorat, Hypochlorit und Chlordioxid, verwendet.

Bei der Photometrie gilt uneingeschränkt das Lambert-Beer Gesetz. Zur Bestimmung der Chlordioxidkonzentration mit der Photometrie wird auf der Wellenlänge 360 nm gemessen. Der molare Extinktionskoeffizient beträgt 1100+/-50 [1/mol*cm].

Mit der Ionenchromatographie werden die Anteile wie Chlorit, Chlorat, Perchlorat, Hypochlorit und Chlordioxid kombinatorisch ermittelt. Die Bedingungen sind im Stand der Technik bekannt und beispielsweise in Petra Hübenbecker, Dissertation Bonn, 2010: "Untersuchung zur Entstehung von Desinfektionsnebenprodukten bei der Aufbereitung von Trinkwasser an Bord schwimmender Marineeinheiten unter Anwendungsbedingungen" beschrieben.

### Beispiel 1: Herstellung von 60 Liter einer etwa 0,6%igen wässrigen Chlordioxidlösung

In einem 60 Liter Kanister werden 56.530g demineralisiertes Wasser eingewogen. Separat werden in getrennten Gefäßen 1970g einer technischen 24,5%igen Natriumchloritlösung und 1.500g Natriumperoxodisulfat (99%ig) abgewogen. Das Peroxid und das Chlorit werden getrennt in einer ausreichenden Menge an Wasser aus dem Kanister gelöst. Nach Eintrag der Natriumchloritlösung wird die Natriumperoxodisulfatlösung zugeschüttet und 24 bis 48h bei 12°C stehengelassen. Die Ausbeuten an Chlordioxid betragen 88 bis 98%, bezogen auf den Natriumchloriteinsatz.

### Beispiel 2: Herstellung von 50 Schnappdeckelflaschen je 0,2 Liter etwa 0,6%iger Chlordioxidlösung

In einem 10 Liter Eimer werden 9,65 Liter demineralisiertes Wasser abgewogen. Separat werden 100g eines pulverförmigen 80%igen Natriumchlorits (20% Natriumchlorid beinhaltend) und getrennt 250g Natriumperoxodisulfat (99%ig) abgewogen. Beide Feststoffe werden mit ausreichender Menge des aus dem Eimer stammenden Wassers getrennt voneinander gelöst. Die Natriumchloritlösung wird in das Restwasser des Eimers gegeben und unter kurzem Rühren mit der Peroxidlösung vermischt.

Das fertige Gemisch wird in Flaschen abgefüllt und verschlossen 2 bis 3 Tage im Kühlschrank bei 5 bis 10°C gelagert. Die Ausbeuten an Chlordioxid betragen 85 bis 99%, bezogen auf den Natriumchloriteinsatz

### Beispiel 3: Herstellung eines Liters einer 0,3%igen Chlordioxidlösung

500mg Natriumchlorit (80%ig) werden in 500ml demineralisiertem Wasser gelöst und mit einer Lösung von 2500mg Natriumperoxodisulfat in 497ml demineralisiertem Wasser gemischt. Die Flasche wird verschlossen und in einem Kühlschrank 24 h stehengelassen. Die Ausbeute beträgt >85%, bezogen auf den Natriumchloriteinsatz.

### Beispiel 4: Herstellung eines Liters einer 0,6%igen Chlordioxidlösung

10,00g Natriumchlorit (80%ig) werden in 100ml demineralisiertem Wasser gelöst. 105,00g Natriumperoxodisulfat (99%ig) werden ebenfalls in 100ml demineralisiertem Wasser gelöst. Beide Lösungen werden in 685ml demineralisiertem Wasser gegeben. Die Flasche wird verschlossen und in einem Kühlschrank 3 h stehengelassen. Die Ausbeute beträgt >95%, bezogen auf den Natriumchloriteinsatz.

### Beispiel 5: Herstellung eines Liters einer 0,6%igen Chlordioxidlösung

10,00g Natriumchlorit (80%ig) werden in 40ml demineralisiertem Wasser gelöst. 330g Natriumperoxodisulfat (99%ig) werden ebenfalls in 620ml demineralisiertem Wasser gelöst. Die Flasche wird verschlossen und in einem Kühlschrank 30 Minuten stehengelassen. Die Ausbeute beträgt >98%, bezogen auf den Natriumchloriteinsatz.

Es wurde festgestellt, dass alle in den Beispielen 1 bis 5 hergestellten Chlordioxidlösungen lagerstabil sind, d.h. dass nach einem Jahr keine nennenswerte Zersetzung (> 5%) des Chlordioxids zu beobachten ist. Weiterhin zeigte sich, dass die Lösungen umso stabiler sind, je weniger Nebenprodukte sich im Reaktionsgemisch befinden.

Es wurde gefunden, dass das fertige Produkt als Radikalpaar-Assoziat membrangängig ist und dieses Radikalpaar-Assoziat veränderte physikalische Eigenschaften aufweist (Dampfdruck, Löslichkeit, etc.).

Für den Dampfdruck einer 0,6%igen Chlordioxidlösung wurden die folgenden Werte bestimmt:

| Temperatur [°C] | reale Gaskonzentration [g/ClO₂/m³] | gerechnete ClO₂-Konzentration [mbar] | Gesamtdruck inkl. Wasserdampf [mbar] |
|---|---|---|---|
| 10 | 96 | 33 | 5 |
| 20 | 114 | 41 | 67 |
| 30 | 147 | 54 | 140 |
| 40 | 171 | 65 | 185 |
| 50 | 209 | 82 | 301 |

Nach der Literatur (DVGW W224/1986 S.5) wird ab einer ClO₂-Konzentration von 100 mbar (= 10 Vol.-%, 300 g ClO₂/m³) wegen einer Explosionsneigung der Lösung gewarnt.

Im Gegensatz dazu wurde gefunden, dass die erfindungsgemäßen Lösungen gut handhabbar sind und keinerlei Neigung zur Spontanzersetzung bzw. Explosion zeigen. Selbst bei hohen Temperaturen von 50°C reagiert das Produkt nur langsam zu Chlorat, bei Temperaturen von 80 bis 90°C schnell. Die Lösung ist dabei zu keiner Zeit entflammbar. Dies wurde auch mit Chlordioxid-Konzentrationen von bis zu 4,5 Gew.-% getestet. Werden Chlordioxidlösungen mit Konzentrationen von mehr als 2,5 Gew.-% hergestellt, führt dies zu einer Druckerhöhung im Reaktionsbehälter, welche überschlägig nach dem idealen Gasgesetz berechenbar ist. Bei Konzentrationen von mehr als etwa 4,5 Gew.-% fällt das Chlordioxid als ölige Flüssigkeit aus.

Bringt man Lösungen mit Chlordioxidwirkstoff-Konzentrationen von 0,01 bis 4,5% in Kontakt mit brennenden Gegenständen/offenem Feuer, so werden diese Gegenstände selbst in 4,5% ClO₂- Lösungen gelöscht; die Gasphase zersetzt sich dabei jedoch. Bei Lösungen mit <1% ClO₂ ist die Reaktion mit der Gasphase nicht wahrnehmbar.

### Bezugszeichenliste

- 1: Vorrichtung zur Herstellung der erfindungsgemäßen Chlordioxidlösung
- 2: Vorratsbehälter für eine Chloritkomponente
- 3: Vorratsbehälter für eine Peroxodisulfatkomponente
- 4: Mischbehälter
- 5: Zuführleitung für die Chloritkomponente
- 6: Zuführleitung für die Peroxodisulfatkomponente
- 7, 7a, 7b: Vorratsbehälter für die Chlordioxidlösung
- 8: Misch- bzw. Rührvorrichtung
- 9: Messzelle in dem Vorratsbehälter für eine Chloritkomponente
- 10: Misch- bzw. Rührvorrichtung
- 11: Messzelle in dem Vorratsbehälter für eine Peroxodisulfatkomponente
- 12: Dosiervorrichtungen für die Chloritkomponente
- 13: Dosiervorrichtungen für die Peroxodisulfatkomponente
- 14: Misch- bzw. Rührvorrichtung in dem Mischbehälter
- 15: Messzelle in dem Mischbehälter
- 16: Zuführleitung zu dem zumindest einen Vorratsbehälter für die Chlordioxidlösung
- 17: Vorrichtung zur Druckregelung
- 18: Dosiervorrichtung
- 19: Messzelle
- 20: Schwimmkörper

## Patentansprüche

1. Verfahren zur Herstellung einer wässrigen Chlordioxidlösung mit einer Konzentration an Chlordioxid im Bereich von 0,3 bis 4,5 Gew.-%, umfassend die Schritte:
(a) Bereitstellen von Chlorit,
(b) Bereitstellen von Peroxodisulfat,
(c) Vereinigen von Chlorit und von Peroxodisulfat in einem wässrigen System und in einem molaren Verhältnis von Peroxodisulfat zu Chlorit [S₂O₈²⁻] / [ClO₂⁻] von größer als 1 unter Bildung der wässrigen Chlordioxidlösung,
wobei zur Herstellung der wässrigen Chlordioxidlösung kein zusätzlicher Puffer zugegeben wird.

2. Verfahren nach Anspruch 1, wobei das molare Verhältnis zwischen Peroxodisulfat und Chlorit [S₂O₈²⁻] / [ClO₂⁻] größer als 2 ist.

3. Verfahren nach Anspruch 1, wobei das molare Verhältnis zwischen Peroxodisulfat und Chlorit [S₂O₈²⁻] / [ClO₂⁻] zwischen 1 und 2 liegt.

4. Verfahren nach einem der Ansprüche 1 bis 3, wobei Chlorit und Peroxodisulfat in den Schritten (a) und (b) in fester Form oder in Form einer wässrigen Lösung bereitgestellt werden,
wobei in Schritt (c)
(c1) beide Komponenten vor dem Vereinigen in Wasser gelöst werden, wenn beide Komponenten in fester Form bereitgestellt werden, oder
(c2) beide Komponenten in fester Form gleichzeitig oder nacheinander in ein wässriges Lösungsmittel eingebracht werden, oder
(c3) beide Lösungen vereinigt werden, wenn beide Komponenten in Form wässriger Lösungen bereitgestellt werden, oder
(c4) beide Komponenten in wässriger Lösung bereitgestellt werden und gleichzeitig oder nacheinander in ein wässriges Lösungsmittel eingebracht werden.
um die wässrige Chlordioxidlösung herzustellen.

5. Verfahren nach Anspruch 4, wobei sowohl Peroxodisulfat als auch Chlorit in Form wässriger Lösungen bereitgestellt wird, wodurch die Peroxodisulfatlösung einen pH-Wert im Bereich von etwa 4 bis etwa 6 aufweist und die Chloritlösung einen pH-Wert im Bereich von etwa 10 bis etwa 12 aufweist.

6. Verfahren nach einem der Ansprüche 1 bis 5, wobei das Vereinigen von Peroxodisulfat und Chlorit bei einer Temperatur im Bereich von etwa 0°C bis etwa 25°C durchgeführt wird.

7. Wässrige Chlordioxidlösung, welche Chlordioxid in einer Menge im Bereich von mehr als 0,3 bis 4,5 Gew.-% enthält, wobei der pH-Wert der Lösung im Bereich von 2 bis 3 liegt und die Lösung keinen Puffer enthält.

8. Verwendung der wässrigen Chlordioxidlösung nach Anspruch 7 als Desinfektionsmittel, als Oxidations- oder Bleichmittel und/oder als Desodorierungsmittel.

9. Verwendung nach Anspruch 8, wobei die Chlordioxidlösung in Form einer Standdesinfektion oder in Form einer Permanentdesinfektion zur Entfernung von Biofilmen, Legionellen oder anderen Keimen in Trinkwasserleitungen, Klimaanlagen, Wasseraufbereitungsanlagen, Boilern oder Pools verwendet wird.

10. Vorrichtung (1) zur Herstellung der Chlordioxidlösung nach Anspruch 7, umfassend
(a) zumindest einen Vorratsbehälter für eine Chloritkomponente (2),
(b) zumindest einen Vorratsbehälter für eine Peroxodisulfatkomponente (3),
(c) zumindest einen Mischbehälter (4), welcher über eine Zuführleitung für die Chloritkomponente (5) mit dem zumindest einen Vorratsbehälter für eine Chloritkomponente (2) verbunden oder verbindbar ist, und welcher über eine Zuführleitung für die Peroxodisulfatkomponente (6) mit dem zumindest einen Vorratsbehälter für eine Peroxodisulfatkomponente (3) verbunden oder verbindbar ist,
(d) zumindest einen Vorratsbehälter für die Chlordioxidlösung (7), welcher über zumindest eine Zuführleitung für die Chlordioxidlösung (16) mit dem Mischbehälter (4) verbunden oder verbindbar ist,
(e) eine Dosiervorrichtung (18), welche an dem zumindest einen Vorratsbehälter für die Chlordioxidlösung (7) angebracht ist, und
(f) einen Schwimmkörper (20), der eingerichtet ist, die Oberfläche der Chlordioxidlösung in dem Vorratsbehälter (7) abzudecken.

11. Vorrichtung (1) zur Herstellung einer Chlordioxidlösung nach Anspruch 10, wobei die Vorrichtung zur Verwendung als Kleinanlage in einem Ein- oder Mehrfamilienhaus oder als großindustrielle Anlage eingerichtet ist.

12. Vorrichtung (1) zur Herstellung einer Chlordioxidlösung nach Anspruch 10, wobei die Vorrichtung transportabel eingerichtet ist, indem sie in einem Gehäuse untergebracht ist.

13. Vorrichtung (1) zur Herstellung einer Chlordioxidlösung nach einem der Ansprüche 10 bis 12, wobei die Zuführleitungen (5) und (6) mit Dosiervorrichtungen (12) und (13) versehen sind, welche eingerichtet sind, die Menge an zuzuführendem Chlorit und Peroxodisulfat derart zu regeln, dass Peroxodisulfat und Chlorit in einem Verhältnis [S₂O₈²⁻] / [ClO₂⁻] von größer als 1 dem Mischbehälter (4) zugeführt wird.

## Claims

1. Method for the preparation of an aqueous chlorine dioxide solution with a concentration of chlorine dioxide in the range from 0.3 to 4.5% by weight, comprising the steps:
(a) providing chlorite,
(b) providing peroxodisulfate,
(c) combining chlorite and peroxodisulfate in an aqueous system and in a molar ratio of peroxodisulfate to chlorite [S₂O₈²⁻] / [ClO₂⁻] of greater than 1 under formation of the aqueous chlorine dioxide solution,
wherein no additional buffer is added for the preparation of the aqueous chlorine dioxide solution.

2. Method according to Claim 1, wherein the molar ratio between peroxodisulfate and chlorite [S₂O₈²⁻] / [ClO₂⁻] is greater than 2.

3. Method according to Claim 1, wherein the molar ratio between peroxodisulfate and chlorite [S₂O₈²⁻] / [ClO₂⁻] lies between 1 and 2.

4. Method according to anyone of Claims 1 to 3, wherein chlorite and peroxodisulfate in steps (a) and (b) are provided in solid form or in the form of an aqueous solution,
wherein in step (c):
(c1) both components, if both components are provided in solid form, are dissolved in water before being combined, or
(c2) both components are introduced into an aqueous solvent in solid form simultaneously or successively, or
(c3) both solutions are combined, if both components are provided in the form of aqueous solutions, or
(c4) both components are provided in aqueous solution and are introduced simultaneously or successively into an aqueous solvent,
in order to prepare the aqueous chlorine dioxide solution.

5. Method according to Claim 4, wherein both peroxodisulfate and chlorite are provided in the form of aqueous solutions, through which the peroxodisulfate solution exhibits a pH-value in the range from about 4 to about 6 and the chlorite solution exhibits a pH-value in the range from about 10 to about 12.

6. Method according to anyone of Claims 1 to 5, wherein the combining of peroxodisulfate and chlorite is carried out at a temperature in the range from about 0°C to about 25°C.

7. Aqueous chlorine dioxide solution, which comprises chlorine dioxide in an amount in the range from more than 0.3 to 4.5% by weight, the pH of the solution lying in the range from 2 to 3 and the solution not containing a buffer.

8. Use of the aqueous chlorine dioxide solution according to Claim 7 as disinfectant, as oxidizing agent or bleaching agent and/or as deodorant.

9. Use according to Claim 8, wherein the chlorine dioxide solution is used in the form of an instant disinfection or in the form of a permanent disinfection for the removal of biofilms, legionella, or other germs in drinking-water lines, air conditioning systems, water treatment plants, boilers or pools.

10. Device (1) for the preparation of the chlorine dioxide solution according to Claim 7, comprising:
(a) at least one storage container for a chlorite component (2),
(b) at least one storage container for a peroxodisulfate component (3),
(c) at least one mixing container (4), which, via a feedline for the chlorite component (5), is connected to or can be connected to the at least one storage container for a chlorite component (2) and which, via a feedline for the peroxodisulfate component (6), is connected to or can be connected to the at least one storage container for a peroxodisulfate component (3),
(d) at least one storage container for the chlorine dioxide solution (7), which, via at least one feedline for the chlorine dioxide solution (16), is connected to or can be connected to the mixing container (4),
(e) a metering device (18), which is installed on the at least one storage container for the chlorine dioxide solution (7), and
(f) a floating body (20) which is adapted to cover the surface of the chlorine dioxide solution in the storage container (7).

11. Device (1) for the preparation of a chlorine dioxide solution according to Claim 10, wherein the device is adapted for use as small-scale plant in a one- or multi-family dwelling or as a large-scale industrial system.

12. Device (1) for the preparation of a chlorine dioxide solution according to Claim 10, wherein the device is adapted in portable fashion by putting it in a housing.

13. Device (1) for the preparation of a chlorine dioxide solution according to anyone of Claims 10 to 12, wherein the feedlines (5) and (6) are provided with metering devices (12) and (13), which are arranged to regulate the amount of chlorite and peroxodisulfate to be fed in in such a way that peroxodisulfate and chlorite are fed to the mixing container (4) in a ratio [S₂O₈²⁻] / [ClO₂⁻] of greater than 1.

## Revendications

1. Procédé de fabrication d'une solution aqueuse de dioxyde de chlore ayant une concentration en dioxyde de chlore dans la plage allant de 0,3 à 4,5 % en poids, comprenant les étapes suivantes :
(a) la mise à disposition d'un chlorite,
(b) la mise à disposition d'un peroxodisulfate,
(c) la réunion du chlorite et du peroxodisulfate dans un système aqueux et en un rapport molaire entre le peroxodisulfate et le chlorite [S₂O₈²⁻] / [ClO₂⁻] supérieur à 1 avec formation de la solution aqueuse de dioxyde de chlore,
aucun tampon supplémentaire n'étant ajouté pour la fabrication de la solution aqueuse de dioxyde de chlore.

2. Procédé selon la revendication 1, dans lequel le rapport molaire entre le peroxodisulfate et le chlorite [S₂O₈²⁻] / [ClO₂⁻] est supérieur à 2.

3. Procédé selon la revendication 1, dans lequel le rapport molaire entre le peroxodisulfate et le chlorite [S₂O₈²⁻] / [ClO₂⁻] est compris entre 1 et 2.

4. Procédé selon l'une quelconque des revendications 1 à 3, dans lequel le chlorite et le peroxodisulfate sont mis à disposition aux étapes (a) et (b) sous forme solide ou sous la forme d'une solution aqueuse,
à l'étape (c),
(c1) les deux composants étant dissous dans de l'eau avant la réunion lorsque les deux composants sont mis à disposition sous forme solide, ou
(c2) les deux composants sous forme solide étant introduits simultanément ou successivement dans un solvant aqueux, ou
(c3) les deux solutions étant réunies lorsque les deux composants sont mis à disposition sous la forme de solutions aqueuses, ou
(c4) les deux composants étant mis à disposition en solution aqueuse et introduits simultanément ou successivement dans un solvant aqueux,
afin de fabriquer la solution aqueuse de dioxyde de chlore.

5. Procédé selon la revendication 4, dans lequel aussi bien le peroxodisulfate que le chlorite sont mis à disposition sous la forme de solutions aqueuses, la solution de peroxodisulfate présentant un pH dans la plage allant d'environ 4 à environ 6 et la solution de chlorite présentant un pH dans la plage allant d'environ 10 à environ 12.

6. Procédé selon l'une quelconque des revendications 1 à 5, dans lequel la réunion du peroxodisulfate et du chlorite est réalisée à une température dans la plage allant d'environ 0 °C à environ 25 °C.

7. Solution aqueuse de dioxyde de chlore, qui contient du dioxyde de chlore en une quantité dans la plage allant de plus de 0,3 à 4,5 % en poids, le pH de la solution se situant dans la plage allant de 2 à 3 et la solution ne contenant pas de tampon.

8. Utilisation de la solution aqueuse de dioxyde de chlore selon la revendication 7 en tant qu'agent désinfectant, en tant qu'agent oxydant ou blanchissant et/ou en tant qu'agent désodorisant.

9. Utilisation selon la revendication 8, dans laquelle la solution de dioxyde de chlore est utilisée sous la forme d'une désinfection prolongée ou sous la forme d'une désinfection permanente pour éliminer les biofilms, les légionelles ou d'autres germes dans des canalisations d'eau potable, des installations de climatisation, des unités de conditionnement de l'eau, des chaudières ou des piscines.

10. Dispositif (1) pour la fabrication de la solution de dioxyde de chlore selon la revendication 7, comprenant :
(a) au moins un contenant de stockage pour un composant chlorite (2),
(b) au moins un contenant de stockage pour un composant peroxodisulfate (3),
(c) au moins un contenant de mélange (4), qui est raccordé ou peut être raccordé par une conduite d'alimentation pour le composant chlorite (5) avec ledit au moins un contenant de stockage pour un composant chlorite (2), et qui est raccordé ou peut être raccordé par une conduite d'alimentation pour le composant peroxodisulfate (6) avec ledit au moins un contenant de stockage pour un composant peroxodisulfate (3),
(d) au moins un contenant de stockage pour la solution de dioxyde de chlore (7), qui est raccordé ou peut être raccordé par au moins une conduite d'alimentation pour la solution de dioxyde de chlore (16) avec le contenant de mélange (4),
(e) un dispositif de dosage (18), qui est fixé sur ledit au moins un contenant de stockage pour la solution de dioxyde de chlore (7), et
(f) un corps flottant (20), qui est conçu pour recouvrir la surface de la solution de dioxyde de chlore dans le contenant de stockage (7).

11. Dispositif (1) pour la fabrication d'une solution de dioxyde de chlore selon la revendication 10, le dispositif étant conçu pour être utilisé sous la forme d'une petite unité dans une habitation individuelle ou collective ou sous la forme d'une unité industrielle de grande envergure.

12. Dispositif (1) pour la fabrication d'une solution de dioxyde de chlore selon la revendication 10, le dispositif étant conçu pour être transportable en étant placé dans un boîtier.

13. Dispositif (1) pour la fabrication d'une solution de dioxyde de chlore selon l'une quelconque des revendications 10 à 12, dans lequel les conduites d'alimentation (5) et (6) sont munies de dispositifs de dosage (12) et (13) qui sont conçus pour ajuster la quantité de chlorite et de peroxodisulfate à introduire de telle sorte que le peroxodisulfate et le chlorite soient introduits en un rapport [S₂O₈²⁻] / [ClO₂⁻] supérieur à 1 dans le contenant de mélange (4).
